(19) Europäisches Patentamt / European Patent Office / Office européen des brevets

(11) **EP 2 012 312 A1**

(12) **EUROPEAN PATENT APPLICATION**

(43) Date of publication:
**07.01.2009 Bulletin 2009/02**

(51) Int Cl.:
**G11B 7/0065** (2006.01)　　**G11B 7/085** (2006.01)

(21) Application number: **08158368.4**

(22) Date of filing: **17.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.06.2007 JP 2007170977**

(71) Applicant: **Sony Corporation
Tokyo 108-0075 (JP)**

(72) Inventor: **Tanabe, Norihiro
Tokyo Kanagawa 108-0075 (JP)**

(74) Representative: **Körber, Martin Hans
Mitscherlich & Partner
Sonnenstraße 33
80331 München (DE)**

(54) **Optical information recording device, optical pickup, optical information recording method and optical information recording medium**

(57)　　An optical information recording device, which emits a first beam to one side (100B) of an optical information recording medium (100) and a second beam to the other side (100A) and forms a recording mark or a hologram by putting together the first and second beams, includes: a section that collects and emits the first beam to the recording medium (70); a section that moves a focal point of the first beam so that the focal point is positioned at a target depth and is aligned with a target track (79A); a section that makes a diameter of the second beam around its focal point larger than a diameter of the first beam around its focal point (60); and a section that puts the focal point of the second beam at the target depth and moves the focal point of the second beam such that the second beam strikes the target track (38A).

FIG. 7

EP 2 012 312 A1

**Description**

CROSS REFERENCES TO RELATED APPLICATIONS

The present invention contains subject matter related to Japanese Patent Application JP2007-170977 filed in the Japanese Patent Office on June 28, 2007, the entire contents of which being incorporated herein by reference.

BACKGROUND OF THE INVENTION

FIELD OF THE INVENTION

The present invention relates to an optical information recording device, optical pickup, optical information recording method and optical information recording medium, and is preferably applied to an optical disc device that records a hologram on an optical disc, for example.

DESCRIPTION OF THE RELATED ART

An optical disc device is popular: The optical disc device is designed to emit an optical beam to an optical disc, such as Compact Disc (CD), Digital Versatile Disc (DVD) and "Blu-Ray Disc (Registered Trademark: also referred to as 'BD')", and interprets the reflection to reproduce information.

In addition, the optical disc device is designed to record information by emitting an optical beam to the optical disc: Its reflectance locally changes where the optical beam strikes.

As for these types of optical disc, the size of an optical spot formed on the optical disc is approximately determined by "$\lambda$/NA ($\lambda$: the wavelength of an optical beam, NA: numerical aperture), which is also known to be proportional to the resolution. For example, an optical disc of BD with a diameter of 120 mm can store about 25 GB. The detailed account of BD is found in Non-Patent Document, Y. Kasami, Y. Kuroda, K. Seo, O. Kawakubo, S. Takagawa, M. Ono, and M. Yamada, Jpn. J. Appl. Phys., 39,756 (2000).

By the way, various types of information, such as various types of content (like music content and video content) and various types of data for computers, can be recorded on the optical disc. In recent years, the amount of information is increasing as the technique of high-definition images develops and the quality of sound improves. Since the number of contents to be recorded on one optical disc is increasing, the capacity of the optical disc may need to increase.

As disclosed in Non-Patent Document, I. Ichimura et al., Technical Digest of ISOM '04, pp52, Oct. 11-15, 2005, Jeju Korea, it is proposed that, by piling up a plurality of recording layers in an optical disc, the recording capacity of the optical disc increase.

Moreover, as disclosed in Non-Patent Document, R. R. McLeod et al., "Micropholographicmultilayer optical disc data storage," Appl. Opt., Vol. 44, 2005, pp3197, it is proposed that an optical disc device use a hologram to record information on an optical disc.

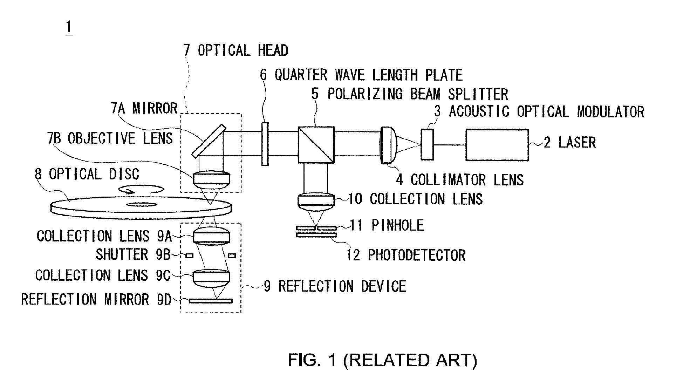

For example, as shown in FIG. 1, an optical disc device 1 focuses an optical beam from an optical head 7 onto an optical disc 8, which is made from photopolymer or the like whose refractive index changes according to the intensity of the beam emitted. After that, a reflection device 9, which faces the undersurface of the optical disc 8 (under the optical disc 8 in FIG. 1), focuses the optical beam onto the same focal point from the opposite direction.

In the optical disc device 1, a laser 2 emits an optical beam, or a laser beam; an acoustic optical modulator 3 modulates its light wave; a collimator lens 4 converts it into collimated light, which is then led to a quarter wave length plate 6 via a polarizing beam splitter 5. The quarter wave length plate 6 transforms the linearly-polarized beam into the circular-polarized beam, which is then led to the optical head 7.

The optical head 7 is designed to record and reproduce information: A mirror 7A reflects the optical beam; and the objective lens 7B collects the optical beam and leads it to the optical disc 8 rotated by a spindle motor (not shown).

At this time, after being focused inside the optical disc 8, the optical beam is reflected by the reflection device 9, which is facing the undersurface of the optical disc 8. After entering the optical disc 8 from the undersurface, the reflected beam is focused on the same focal point inside the optical disc 8. Incidentally, the reflection device 9 includes a collection lens 9A, a shutter 9B, a collection lens 9C and a reflection mirror 9D.

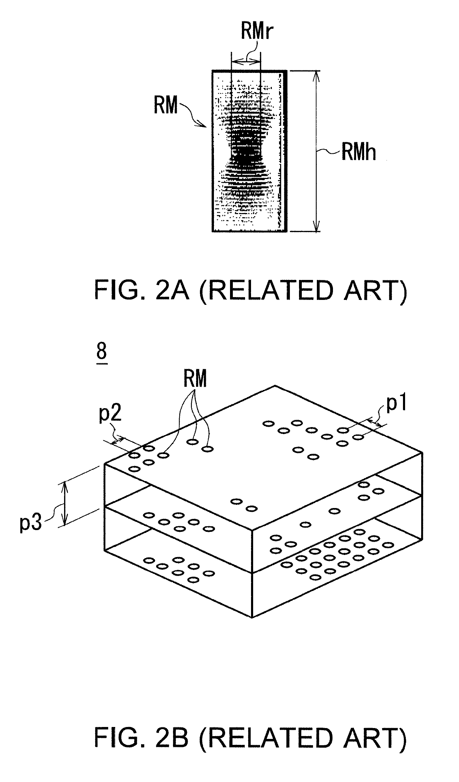

As a result, as shown in FIG. 2A, standing waves appear around the focal point of the optical beam, and a recording mark RM, or a hologram, is produced: Its optical spot size is small, and it looks like made by attaching two cones at their bottoms. In this manner, the recording mark RM is recorded as information.

When recording a plurality of recording marks RM inside the optical disc 8, the optical disc device 1 rotates the optical disc 8, produces a series of recording marks RM along concentric or spiral tracks, and forms one mark recording layer. Moreover, by adjusting the position of the focal point of the optical beam, the recording marks RM are recorded such that a plurality of mark recording layers pile up.

Accordingly, the optical disc 8 has a multilayer structure, including a plurality of mark recording layers inside. For example, as shown in FIG. 2B, on the optical disc 8, a distance between the recording marks RM, or a mark pitch p1, is 1.5 $\mu$m, a distance between tracks, or a track pitch p2, is 2 $\mu$m, and a distance between layers p3 is 22.5 $\mu$m.

When reproducing information from the disc 8 on which the recording marks RM are recorded, the reflection device 9 closes the shutter 9B and thereby prevents the optical beam from entering the optical disc 8 from the undersurface.

At this time, in the optical disc device 1, the optical head 7 emits an optical beam to the recording mark RM on the optical disc 8. A reproduced optical beam, caused by the recording mark RM, enters the optical head 7. The quarter wave length plate 6 converts it from circularly-polarized light to linearly-polarized light and leads it to the polarizing beam splitter 5. The polarizing beam splitter 5 reflects it. The reflection is collected by a collection lens 10 and then projected onto a photodetector 12 via a pinhole 11.

In the optical disc device 1, the photodetector 12 detects the intensity of the reproduced optical beam and reproduces information from the result of detection.

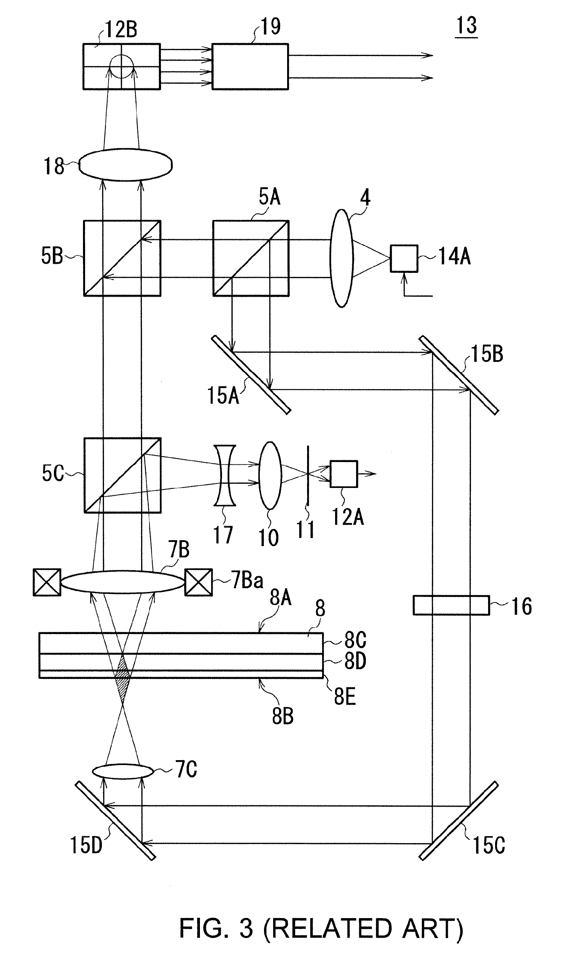

On the other hand, there are certain types of optical disc devices, like an optical disc device 13 as shown in FIG. 3 whose parts have been designated by the same reference numerals and symbols as the corresponding parts of FIG. 1, which are disclosed in Jpn. Pat. Publication No. 3452106: During a recording process, the optical disc device 13 divides an optical beam into two, one of which enters an optical disc 8 from the upper surface while the other enters the optical disc 8 from the undersurface; the two beams are put together.

In the optical disc device 13, a collimator lens 4 transforms an optical beam emitted from a laser diode 14A into collimated light; and a beam splitter 5A divides it into two optical beams (a first optical beam and a second optical beam).

In the optical disc device 13, after being transmitted through the beam splitter 5A, the first optical beam passes through other beam splitters 5B and 5C and enters an objective lens 7B. The objective lens 7B collects the first optical beam and leads it to the first surface 8A of the optical disc 8.

At this time, in the optical disc device 13, the reflection of the first optical beam from a boundary between a base plate 8C and dielectric layer 8D of the optical disc 8 is partially projected onto a photodetector 12B via the objective lens 7B, the beam splitters 5C and 5B, and a cylindrical lens 18. A detection signal, which is produced by the photodetector 12 according to the intensity of the beam, is amplified by a matrix amplifier 19. Based on the amplified detection signal, a servo control signal is produced.

In accordance with the servo control signal, the optical disc device 13 drives an actuator 7Ba to move the objective lens 7B.

On the other hand, in the optical disc device 13, the second optical beam is reflected by the beam splitter 5A. The second optical beam then enters a convex lens 7C after being reflected by the mirrors 15A, 15B, 15C and 15D. The convex lens 7C collects the second optical beam and leads it to the second surface 8B of the optical disc 8.

At this time, the recording mark RM, or a hologram, is produced as a result of the interference of the first and second optical beams (indicated by diagonal lines). Therefore, the recording mark RM is recorded on a recording layer 8E as information.

During a reproduction process, the optical disc device 13 closes a shutter 16, which is placed on an optical path of the second optical beam, to block the second optical beam; and a reproduced optical beam, produced as a result of the reflection of the first optical beam from the recording mark RM recorded on the optical disc 8, is projected onto a photodetector 12A via the objective lens 7B, the beam splitter 5C, a concave lens 17, a collection lens 10, and a pinhole plate 11.

The photodetector 12 of the optical disc device 1 detects the intensity of the reproduced optical beam and then reproduced information from the result of detection.

<u>SUMMARY OF THE INVENTION</u>

However, since a hologram is only produced where both the first and second optical beam strike, the above optical disc device 13 may need an advanced servo control process to precisely focus the first and second optical beams on the same focal point. It could put enormous burden on the servo control.

The present invention has been made in view of the above points and is intended to provide an optical information recording device, optical pickup, optical information recording method, and optical information recording medium capable of reducing burden imposed on servo control.

In one aspect of the present invention, an optical information recording device that divides a beam emitted from a beam source into a first beam and a second beam, emits the first beam to one side of an optical information recording medium and the second beam to the other side of the optical information recording medium, and forms a recording mark that is a hologram by putting together the first and second beams inside the optical information recording medium, the optical information recording device including: a first beam collection section that collects the first beam and emits the first beam to the optical information recording medium; a first focal point shifting section that moves a focal point of the first beam so that the focal point of the first beam is positioned at a target depth and is aligned with a target track, the target depth representing a depth at which the recording mark should be formed in terms of the direction of depth along which it moves close to or away from the optical information recording medium and the target track representing a track where the recording mark should be formed in terms of a parallel direction to both sides of the optical information recording medium; a second beam collection section that makes, when collecting and emitting the second beam to the optical information recording medium, a second beam collection angle of an optical axis of the second beam emitted to the optical information recording medium relative to its outermost circumference smaller than a first beam collection angle of an optical axis of the first beam emitted to the optical information recording medium relative to its outline in order to make a diameter of the second beam around its focal point larger than a diameter of the first beam around its focal point; and a second focal point shifting section that puts the focal point of the second beam at the target depth and moves the focal point of the second beam such that the second beam strikes the target track.

Therefore, even if the focal point of the second beam does not precisely strike the target track, the recording mark, whose size is determined by the first beam, is recorded at the target position.

In another aspect of the present invention, an optical pickup that divides a beam emitted from a beam source into a first beam and a second beam, emits the first beam to one side of an optical information recording medium and the second beam to the other side of the optical information recording medium, and forms a recording mark that is a hologram by putting together the first and second beams inside the optical information recording medium, the optical pickup including: a first beam collection section that collects the first beam and emits the first beam to the optical information recording medium; a first focal point shifting section that moves a focal point of the first beam so that the focal point of the first beam is positioned at a target depth and is aligned with a target track, the target depth representing a depth at which the recording mark should be formed in terms of the direction of depth along which it moves close to or away from the optical information recording medium and the target track representing a track where the recording mark should be formed in terms of a parallel direction to both sides of the optical information recording medium; a second beam collection section that makes, when collecting and emitting the second beam to the optical information recording medium, a second beam collection angle of an optical axis of the second beam emitted to the optical information recording medium relative to its outermost circumference smaller than a first beam collection angle of an optical axis of the first beam emitted to the optical information recording medium relative to its outermost circumference in order to make a diameter of the second beam around its focal point larger than a diameter of the first beam around its focal point; and a second focal point shifting section that puts the focal point of the second beam at the target depth and moves the focal point of the second beam such that the second beam strikes the target track.

Therefore, even if the focal point of the second beam does not precisely strike the target track, the recording mark, whose size is determined by the first beam, is recorded at the target position.

In another aspect of the present invention, an optical information recording method that divides a beam emitted from a beam source into a first beam and a second beam, emits the first beam to one side of an optical information recording medium and the second beam to the other side of the optical information recording medium, and forms a recording mark that is a hologram by putting together the first and second beams inside the optical information recording medium, the optical information recording method including: moving, when collecting the first beam and emitting the first beam to the optical information recording medium, a focal point of the first beam so that the focal point of the first beam is positioned at a target depth and is aligned with a target track, the target depth representing a depth at which the recording mark should be formed in terms of the direction of depth along which it moves close to or away from the optical information recording medium and the target track representing a track where the recording mark should be formed in terms of a parallel direction to both sides of the optical information recording medium; making, when collecting and emitting the second beam to the optical information recording medium, a second beam collection angle of an optical axis of the second beam emitted to the optical information recording medium relative to its outermost circumference smaller than a first beam collection angle of an optical axis of the first beam emitted to the optical information recording medium relative to its outermost circumference in order to make a diameter of the second beam around its focal point larger than a diameter of the first beam around its focal point; and putting the focal point of the second beam at the target depth and moving the focal point of the second beam such that the second beam strikes the target track.

Therefore, even if the focal point of the second beam does not precisely strike the target track, the recording mark, whose size is determined by the first beam, is recorded at the target position.

In another aspect of the present invention, an optical information recording medium includes a recording layer on which a recording mark is recorded due to the change of refractive index around a high-power bright portion of a hologram that is formed where both first and second beam strike when the second beam whose wavelength is the same as the first beam is emitted, the diameter of the second beam around its focal point being larger than the diameter of the first beam around its focal point while the refractive index substantially does not change where only the second beam strikes.

Since the refractive index substantially does not change where only the second beam strikes, the recording mark, whose size is determined by the first beam, is recorded at the target position.

According to an embodiment of the present invention, even if the focal point of the first beam does not perfectly align with the focal point of the second beam, the recording mark, whose size is determined by the first beam, is recorded at the target position. Thus, an optical information recording device, optical pickup and optical information recording method capable of reducing burden imposed on servo control can be realized.

Moreover, even if the focal point of the second beam does not precisely strike the target track, the recording mark, whose size is determined by the first beam, is recorded at the target position. Thus, an optical information recording medium capable of reducing burden imposed on servo control can be realized.

The nature, principle and utility of the invention will become more apparent from the following detailed description when read in conjunction with the accompanying drawings in which like parts are designated by like reference numerals or characters.

BRIEF DESCRIPTION OF THE DRAWINGS

In the accompanying drawings:

FIG. 1 is a schematic diagram illustrating the configuration of an optical disc device that employs a method of standing-wave recording (1);
FIGS. 2A and 2B are schematic diagrams illustrating how to form a hologram;
FIG. 3 is a schematic diagram illustrating the configuration of an optical disc device that employs a method of standing-wave recording (2);
FIG. 4A and 4B are schematic diagrams illustrating the configuration of an optical disc according to an embodiment of the present invention;
FIG. 5 is a schematic diagram illustrating the configuration of an optical disc device according to an embodiment of the present invention;
FIG. 6 is a schematic appearance diagram illustrating an optical pickup;
FIG. 7 is a schematic diagram illustrating the configuration of an optical pickup;
FIG. 8 is a schematic diagram illustrating an optical path of a red optical beam;
FIG. 9 is a schematic diagram illustrating the configuration of a detection area of a photodetector (1);
FIG. 10 is a schematic diagram illustrating an optical path of a blue optical beam (1);
FIG. 11 is a schematic diagram illustrating an optical path of a blue optical beam (2);
FIG. 12 is a schematic diagram illustrating the configuration of a detection area of a photodetector (2);
FIGS. 13A and 13B are schematic diagrams illustrating a focal point and a beam waist;
FIG. 14 is a schematic diagram illustrating how to form a hologram (1);
FIG. 15 is a schematic diagram illustrating how to form a hologram (2); and
FIG. 16 is a schematic diagram illustrating a wave front of a blue optical beam.

DETAILED DESCRIPTION OF PREFERRED EMBODIMENTS

An embodiment of the present invention will be described in detail with reference to the accompanying drawings.

(1) Configuration of Optical Disc

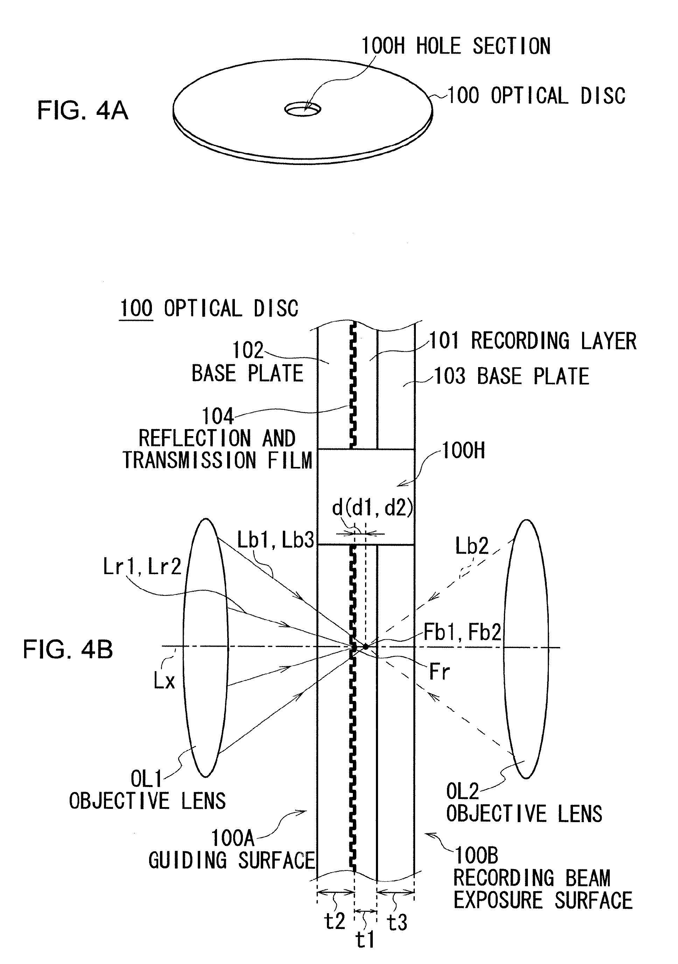

The following describes an optical disc 100, which is used as an optical information recording medium in this embodiment of the present invention. FIG. 4A is an appearance diagram. The optical disc 100 is a disc-shaped disc with a diameter of approximately 120 mm, similar to CD, DVD and BD. A hole section 100H is formed at the center of the optical disc 100.

FIG. 4B is a cross-section diagram. The optical disc 100 includes a recording layer 101 in the middle of the disc 100. The recording layer 101 on which information are recorded is sandwiched between base plates 102 and 103.

Incidentally, the thickness t1 of the recording layer 101 is about 0.3 mm. The thickness t2 and t3 of the base plates 102 and 103 are the same, around 0.6 mm.

The base plates 102 and 103 are made from materials such as polycarbonate or glass. Each of the base plates 102 and 103 transmits light from one surface to the other surface with a high transmission rate. Moreover, the base plates 102 and 103 have some level of strength to protect the recording layer 101. By the way, the base plates 102 and 103 have an antireflection coating on their surfaces, preventing unwanted reflections.

Like the optical disc 8 (FIG. 1), the recording layer 101 is made from photopolymer or the like whose refractive index changes according to the intensity of the beam emitted: It reacts to a blue optical beam with a wavelength of 405 nm. As shown in FIG. 4B, if there is interference between two relatively-high intensity blue optical beams Lb1 and Lb2 inside the recording layer 101, it causes standing waves in the recording layer 101 and forms an interference pattern with the characteristics of hologram as illustrated in FIG. 2A.

In addition, the optical disc 100 has a reflection and transmission film 104 as a reflection layer at the boundary between the recording layer 101 and the base plate 102. The reflection and transmission film 104 is a dielectric multilayer or the like, whose blue transmission beam area 104A (described below), which is used for a reproduction process and a recording process, has the characteristics of selectively reflecting or transmitting the beam according to the wavelength: It transmits the blue optical beams with a wavelength of 405 nm, including the blue optical beams Lb1 and Lb2 and a blue reproduced optical beam Lb3, while reflecting a red optical beam with a wavelength of 660 nm.

On the reflection and transmission film 104, a pre-groove (or a guiding groove) for tracking servo is formed. More specifically, spiral tracks are formed by lands and grooves in a similar way to that of BD-R (Recordable). The recording segments of the tracks are associated with serial-number addresses, making it possible to identify a track from the address to record or reproduce information therefrom.

Instead of the pre-groove, a pit or the like may be formed on the reflection and transmission film 104 (at the boundary between the recording layer 101 and the base plate 102). Alternatively, the combination of the pre-groove, the pits and the like may be applied.

If a red optical beam Lr1 is emitted and enters the optical disc 100 from the side of the base plate 102, the reflection and transmission film 104 reflects it toward the side of the base plate 102. The reflected optical beam will be referred to as "red reflection optical beam Lr2", hereinafter.

The red reflection optical beam Lr2 is expected to be used for position control of a predetermined objective lens OL1 of, for example, an optical disc device (i.e. focus control and tracking control) in order to lead a focal point Fr of the red optical beam Lr1 collected by the objective lens OL1 to a target track.

Incidentally, an optical disc 100's surface on the side of the base plate 102 is also referred to as guiding surface 100A while a surface on the side of the base plate 103 is referred to as recording beam exposure surface 100B.

In reality, during the process of recording information on the optical disc 100, as shown in FIG. 4B, the position of the objective lens OL1 is controlled to collect the red optical beam Lr1, which is then focused on a target track on the reflection and transmission film 104.

On the other hand, the blue optical beam Lb1 that shares an optical axis Lx with the red optical beam Lr1 is collected by the objective lens OL1 and transmitted through the base plate 102 and the reflection and transmission film 104. And then the blue optical beam Lb1 is focused on behind the target track of the recording layer 101, or on the side of the base plate 102. At this time, the focal point Fb1 of the blue optical beam Lb1 is further away from the objective lens OL than is the focal point Fr which is on the same optical axis Lx.

Moreover, the blue optical beam Lb2 that shares an optical axis Lx with the blue optical beam Lb1 and has the same wavelength as the blue optical beam Lb1 is emitted toward the opposite side of the optical disc 100 (i.e. to the base plate 103) and then collected by an objective lens OL2, which has substantially the same optical characteristics as the objective lens OL1. Since the position of the objective lens OL2 is controlled, the focal point Fb2 of the blue optical beam Lb2 is the same as that of the blue optical beam Lb1.

As a result, a relatively small interference pattern of a recording mark MK is recorded at the focal point Fb1, or Fb2, behind the target track of the recording layer 101.

At this time, inside the recording layer 101, the recording mark RM is produced where more than the predetermined intensity of the beam has struck, or where both the convergent blue optical beams Lb1 and Lb2 have struck. Accordingly, the recording mark RM looks like made by attaching two cones at their bottoms, with its middle (where the bottoms are attached) constricted, as shown in FIG. 2A.

Incidentally, a diameter RMr of the constricted portion of the recording mark RM is determined according to the blue optical beam Lb1 as follows:

$$ \mathrm{RMr} = 1.2 \times \frac{\lambda}{\mathrm{NA}} \qquad \cdots\cdots (1) $$

where $\lambda$ is the wavelength of the blue optical beam Lb1 and NA is a numerical aperture of the objective lens OL1: This is described in detail below.

Moreover, the height RMh of the recording mark MR is expressed as follows:

$$RMh = 4 \times n \times \frac{\lambda}{NA^2} \qquad \cdots\cdots (2)$$

where n is the refractive index of the objective lens OL1.

For example, if wavelength $\lambda$ is 405 nm, numerical aperture NA is 0.5 and refractive index n is 1.5, then diameter RMr is 0.97 $\mu$m according to the above equation (1) and height RMh is 9.72 $\mu$m according to the above equation (2).

Moreover, the optical disc 100 is designed such that the thickness t1 of the recording surface 101 (= 0.3 mm) is substantially greater than the height RMh of the recording mark RM. The recording marks RM are recorded inside the recording layer 101 of the optical disc 100 as shown in FIGS. 2B, such that the distances (or depths) between the recording marks RM and the reflection and transmission film 104 are different. A plurality of mark recording layers is piled up in the direction of the thickness of the optical disc 100. In this manner, multilayer recording is performed.

In this case, inside the recording layer 101 of the optical disc 100, the depths of the focal points Fb1 and Fb2 of the blue optical beams Lb1 and Lb2 are adjusted to change the depth of the recording mark RM. If the mutual interference between the recording marks RM and the like are taken into consideration and the distance p3 between the mark recording layers is set to around 15 $\mu$m, about 20 mark recording layers can be created inside the recording layer 101. By the way, the distance p3 may be set to other values, as long as the mutual interference between the recording marks RM and the like are taken into consideration.

On the other hand, when information is reproduced from the optical disc 100, the position of the objective lens OL1 is controlled in a similar way to when information is recorded: The red optical beam Lr1 is collected by the objective lens OL1 and then focused on a target track on the reflection and transmission film 104.

Moreover, in the optical disc 100, the focal point Fb of the blue optical beam Lb1, which was collected by the same objective lens OL1 and transmitted through the base 102 and the reflection and transmission film 104, is focused on a position, which is behind the target track of the recording layer 101 and is at a target depth (also referred to as "target mark position," hereinafter).

At this time, the recording mark RM, which is at the same position as the focal point Fb1, has the characteristics of hologram, and thereby causes a blue reproduction optical beam Lb3. The blue reproduction optical beam Lb3 has substantially the same optical characteristics as the blue optical beam Lb2, which is emitted when the recording marks RM are recorded. The blue reproduction optical beam Lb3 travels in the same direction as the blue optical beam Lb2, i.e. it travels from the recording layer 101 to the base plate 102 while being diverged.

In this manner, when information are recorded on the optical disc 100, the red optical beam Lr1 is used for position control, and the blue optical beams Lb1 and Lb2 are used for recording information. The recording mark RM is recorded as information at a position where both the focal points Fb1 and FB2 strike inside the recording layer 101, or at a target mark position that is behind the target track of the reflection and transmission film 104 and is at a target depth

Moreover, when information are reproduced from the optical disc 100, the red optical beam Lr1 is used for position control, and the blue optical beam Lb1 is used for reproducing information. As a result, the recording mark RM, which is recorded where the focal point Fb1 strikes or at a target mark position, causes the blue reproduction optical beam Lb3.

(2) Configuration of Optical Disc Device

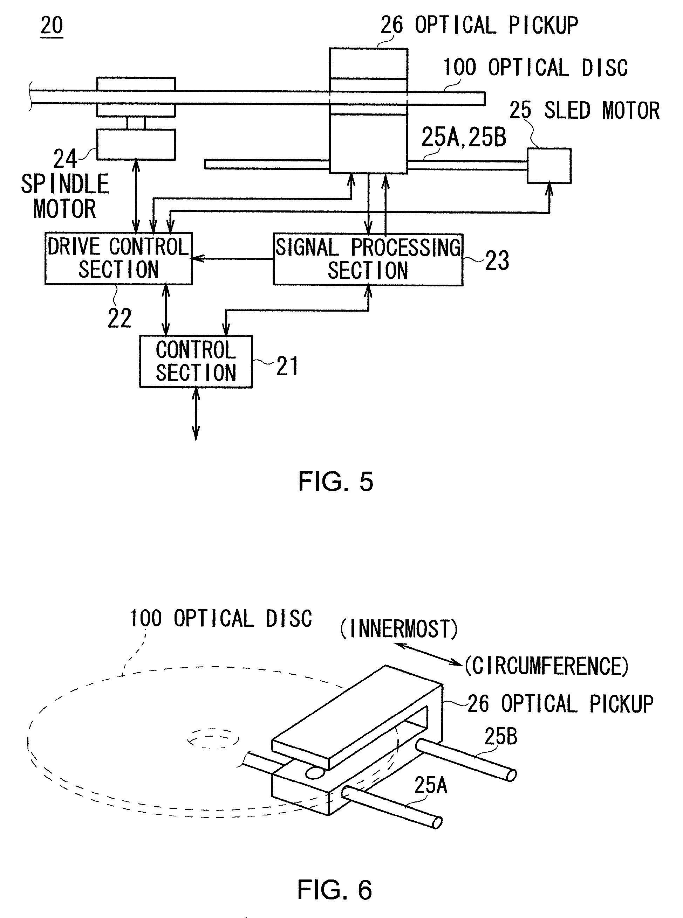

The following describes the optical disc device 20 for the above optical disc 100. As shown in FIG. 5, the optical disc device 20 includes a control section 21 that takes overall control of the device 20.

The control section 21 includes Central Processing Unit (CPU, not shown) as an integral part. The CPU reads out a basic program, an information recording program, a focal point depth adjustment program and other programs from Read Only Memory (ROM, not shown) and loads them onto Random Access Memory (RAM, not shown) to perform an information recording process and other processes.

For example, with the optical disc 100 put in the device 20, when the control section 21 receives an information recording command, a piece of recording information and a piece of recording address information from an external device or the like (not shown), the control section 21 supplies a drive command and a piece of recording address information to a drive control section 22 and a piece of recording information to a signal processing section 23. Incidentally, the piece of recording address information is a piece of address information representing an address of an area where the piece of recording information will be recorded: An address is allocated to each segment of the recording layer 101 of the optical disc 100.

The drive control section 22 follows the drive command and drives and controls a spindle motor 24 to rotate the optical disc 100 at a predetermined rotation speed. In addition, the drive control section 22 drives and controls the sled motor 25 to move an optical pickup 26 along motion shafts 25A and 25B in the radial direction of the optical disc 100 (i.e. toward the innermost part or the circumference) and put it under a position corresponding to the piece of recording address information.

The signal processing section 23 performs various types of signal processes, such as predetermined coding or modulation process, to the piece of recording information supplied to generate a recording signal, which is then supplied to the optical pickup 26.

The optical pickup 26 has a C-shaped cross section, as shown in FIG. 6. As illustrated in FIG. 4B, the optical pickup 26 is designed to emit optical beams to both sides of the optical disc 100 so that they are focused on the optical disc 100.

The optical pickup 26, under the control of the drive control section 22 (FIG. 5), performs a focus control process and a tracking control process to focus the optical beam on a track (also referred to as "target track") identified by the piece of recording address information on the recording layer 101 of the optical disc 100, and records a recording mark RM corresponding to a recording signal supplied from the signal processing section 23 (described below).

When receiving from an external device (not shown) an information reproduction command and a piece of reproduction address information representing an address of an area where the piece of recording information will be recorded, the control section 21 supplies a drive command to the drive control section 22 and a reproduction process command to the signal processing section 23.

In a similar way to when the information is recorded, the drive control section 22 drives and controls the spindle motor 24 to rotate the optical disc 100 at a predetermined rotation speed, and also drives and controls the sled motor 25 to move the optical pickup 26 to under a location corresponding to the piece of reproduction address information.

The optical pickup 26, under the control of the drive control section 22 (FIG. 5), performs a focus control process and a tracking control process to focus the optical beam on a track (i.e. a target track) identified by the piece of reproduction address information on the recording layer 101 of the optical disc 100, and emits a predetermined intensity of an optical beam. At this time, the optical pickup 26 detects a reproduction optical beam from the recording mark RM of the recording layer 101 of the optical disc 100 and supplies to the signal processing section 23 a detection signal corresponding to the amount of beam it has detected (described later).

The signal processing section 23 performs various types of processes, such as predetermined demodulation and decoding process, to the supplied detection signal, generates a piece of reproduced information, and supplies the piece of reproduced information to the control section 21. In response, the control section 21 transmits the piece of reproduced information to an external device (not shown).

In this manner, the control section 21 of the optical disc device 20 controls the optical pickup 26 to record information on the target track in the recording layer 101 of the optical disc 100 and to reproduce information from the target track.

(3) Configuration of Optical Pickup

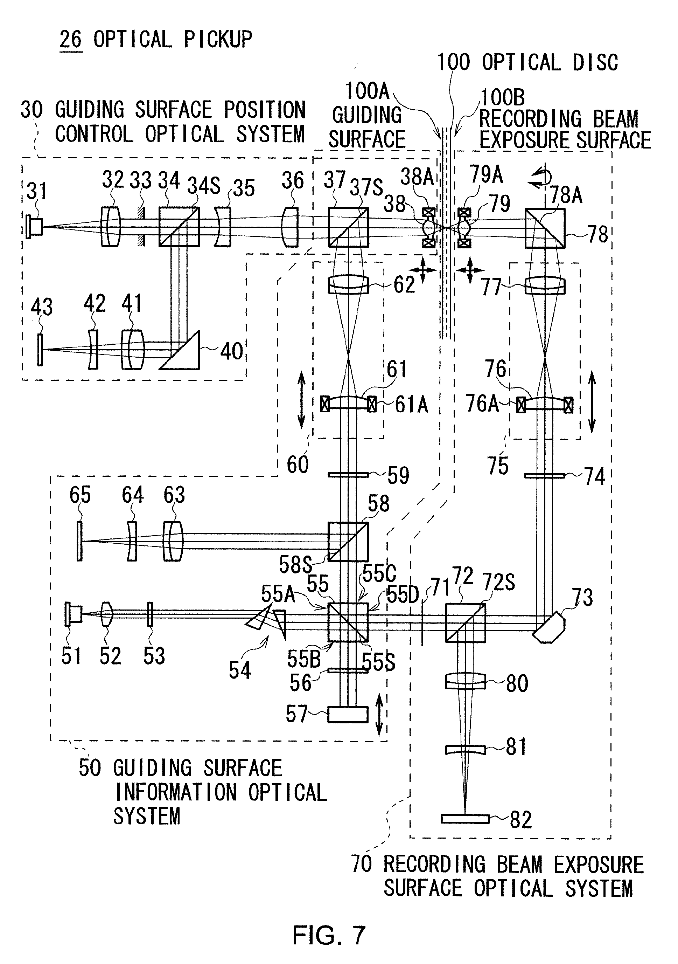

The following describes the configuration of the optical pickup 26. As schematically shown in FIG. 7, the optical pickup 26 is equipped with many optical components, which can be divided into three systems: a guiding surface position control optical system 30, a guiding surface information optical system 50, and a recording beam exposure surface optical system 70.

(3-1) Configuration of Guiding Surface Position Control System

The guiding surface position control optical system 30 is designed to emit a red optical beam Lr1 to the guiding surface 100A of the optical disc 100 and to receive a red reflection optical beam Lr2, or the reflection of the red optical beam Lr1 from the optical disc 100.

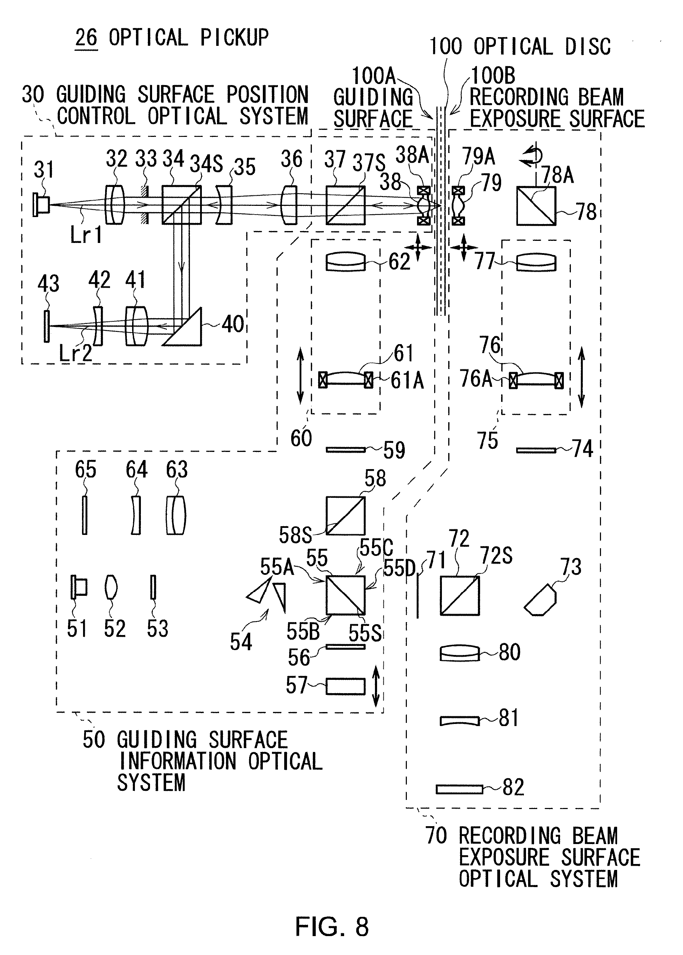

As shown in FIG. 8, a laser diode 31 of the guiding surface position control optical system 30 is capable of emitting a red laser beam with a wavelength of approximately 660 nm. In reality, the laser diode 31, under the control of the control section 21 (FIG. 5), emits a predetermined intensity of divergent red optical beam Lr1 to a collimator lens 32. The collimator lens 32 transforms the red optical beam Lr1 from divergent light to collimated light, and leads it to a non-polarizing beam splitter 34 via a slit 33.

A reflection and transmission plane 34A of the non-polarizing beam splitter 34 transmits 50 percent of the red optical beam Lr1 therethrough, and leads it to a correction lens 35. The correction lenses 35 and 36 converge the red optical beam Lr1 after diverging it, and lead it to a dichroic prism 37.

A reflection and transmission surface 37S of the dichroic prism 37 has so-called wavelength selectivity, which means that its transmission and reflection rates vary according to the wavelength of the optical beam: The reflection and transmission surface 37S transmits substantially 100 percent of the red optical beam therethrough while substantially reflecting 100 percent of the blue optical beam. Therefore, the reflection and transmission surface 37S of the dichroic prism 37 transmits the red optical beam Lr1 therethrough and leads it to a first objective lens 38.

The first objective lens 38 collects the red optical beam Lr1 and leads it to the guiding surface 100A of the optical disc 100. As shown in FIG. 4B, the red optical beam Lr1 is reflected by the reflection and transmission film 104 after passing through the base plate 102, and travels, as a red reflection optical beam Lr2, in a direction opposite to the red optical beam Lr1.

Incidentally, the first objective lens 38 has been optimized during a designing stage to be suitable for the blue optical beam Lb1. As for the red optical beam Lr1, it serves as a collection lens with a numerical aperture of 0.41 due to the optical distances from a slit 33, the correction lenses 35 and 36 and the like.

After that, the red reflection optical beam Lr2 travels through the first objective lens 38, the dichroic prism 37, the correction lens 36 and 35, and is converted into collimated light before reaching the non-polarizing beam splitter 34.

The non-polarizing beam splitter 34 reflects about 50 percent of the red reflection optical beam Lr2 to lead it to a mirror 40. The mirror 40 reflects the red reflection beam Lr2 to a collection lens 41.

The collection lens 41 converges the red reflection optical beam Lr2. After astigmatism is added by a cylindrical lens 42, the red reflection optical beam Lr2 is projected onto the photodetector 43.

By the way, in the optical disc device 20, the axial run-out of the rotating optical disc 100 could happen, and this may change the position of the target track relative to the guiding surface position control optical system 30.

Accordingly, in the guiding surface position control optical system 30, in order to make the focal point Fr of the red optical beam Lr1 (FIG. 4B) follow the target track precisely, the focal point Fr has to move in a focusing direction such that it moves close to or away from the optical disc 100, and also has to move in a tracking direction such that it moves toward the innermost or peripheral portion of the optical disc 100.

Therefore, the first objective lens 38 can be moved by a two-axis actuator 38A in two-axis directions, or the focusing direction and tracking direction.

In the guiding surface position control optical system 30 (FIG. 8), the optical position of each optical component is adjusted such that the in-focus state of the red optical beam Lr1 emitted to the reflection and transmission film 104 of the optical disc 100 after being collected by the first objective lens 38 will be reflected on the in-focus state of the red optical beam Lr2 projected onto the photodetector 43 after being collected by the collection lens 41.

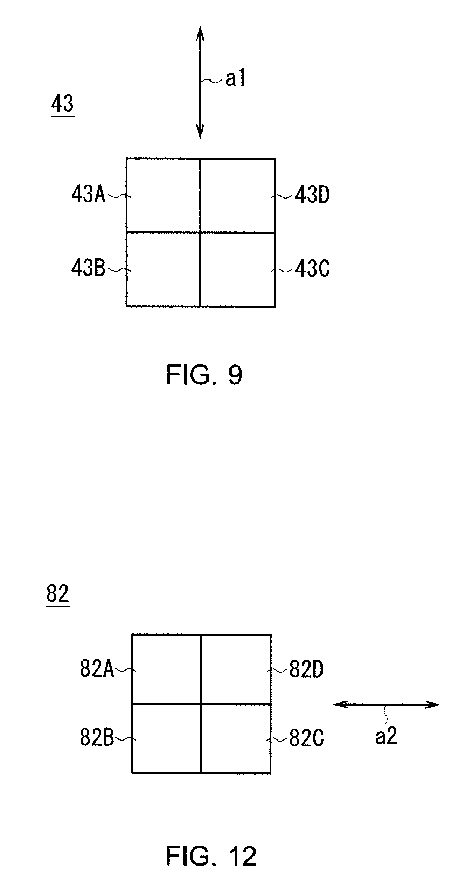

As shown in FIG. 9, one surface of the photodetector 43, onto which the red reflection optical beam Lr2 is projected, includes four detection sections 43A, 43B, 43C and 43D, an area divided into four in grid pattern. Incidentally, the direction indicated by arrow a1 (or the vertical direction in the diagram) corresponds to the traveling direction of the track when the read optical beam Lr1 is emitted toward the reflection and transmission film 104 (FIG. 4).

The detection sections 43A, 43B, 43C and 43D of the photodetector 43 partially detects the red reflection optical beam Lr2, generates the detection signals SDAr, SDBr, SDCr and SDDr, which vary according to the amount of light they have detected, and then transmits them to the signal processing section 23 (FIG. 5).

The signal processing section 23 is designed to perform a focus control process employing the so-called astigmatic method. The signal processing section 23 calculates the focus error signal SFEr as follows:

$$SFEr = (SDAr + SDCr) - (SDBr + SDDr) \qquad \cdots\cdots (3)$$

The signal processing section 23 then supplies the focus error signal SFEr to the drive control section 22.

This focus error signal SFEr represents a distance from the focal point Fr of the optical read beam Lr1 to the reflection film 104 of the optical disc 100.

In addition, the signal processing section 23 is designed to perform the tracking control process employing the so-called push-pull method. The signal processing section 23 calculates a tracking error signal STEr as follows:

$$STEr = (SDAr + SDDr) - (SDBr + SDCr) \qquad \cdots\cdots (4)$$

The signal processing section 23 supplies the tracking error signal STEr to the drive control section 22.

The tracking error signal STEr represents a distance from the focal point Fr of the red optical beam Lr1 to the target track of the reflection and transmission film 104 of the optical disc 100.

The drive control section 22 generates a focus drive signal SFDr from the focus error signal SFEr, and supplies the focus drive signal SFDr to the two-axis actuator 38A to perform a feedback control process (i.e. the focus control process) of the first objective lens 38, by which the red optical beam Lr1 is focused on the reflection and transmission film 104 of the optical disc 100.

Moreover, the drive control section 22 generates a tracking drive signal STDr from the tracking error signal STEr, and supplies the tracking drive signal STDr to the two-axis actuator 38A to perform a feedback control process (i.e. the tracking control process) of the first objective lens 38, by which the red optical beam Lr1 is focused on the target track of the reflection and transmission film 104 of the optical disc 100.

In this manner, the guiding surface position control optical system 30 emits the red optical beam Lr1 to the reflection and transmission film 104 of the optical disc 100, and supplies the result of receiving the refection of the beam (or the red reflection optical beam Lr2) to the signal processing section 23. In response, the drive control section 22 performs the focus control and tracking control processes of the first objective lens 38 to focus the red optical beam Lr1 on the target track of the reflection and transmission film 104.

(3-2) Configuration of Guiding Surface Information Optical System

The guiding surface information optical system 50 is designed to emit the blue optical beam Lb1 to the guiding surface 100A of the optical disc 100 and to receive the blue optical beam Lb2 or Lb3 from the optical disc 100.

(3-2-1) Emission of Blue Optical Beam

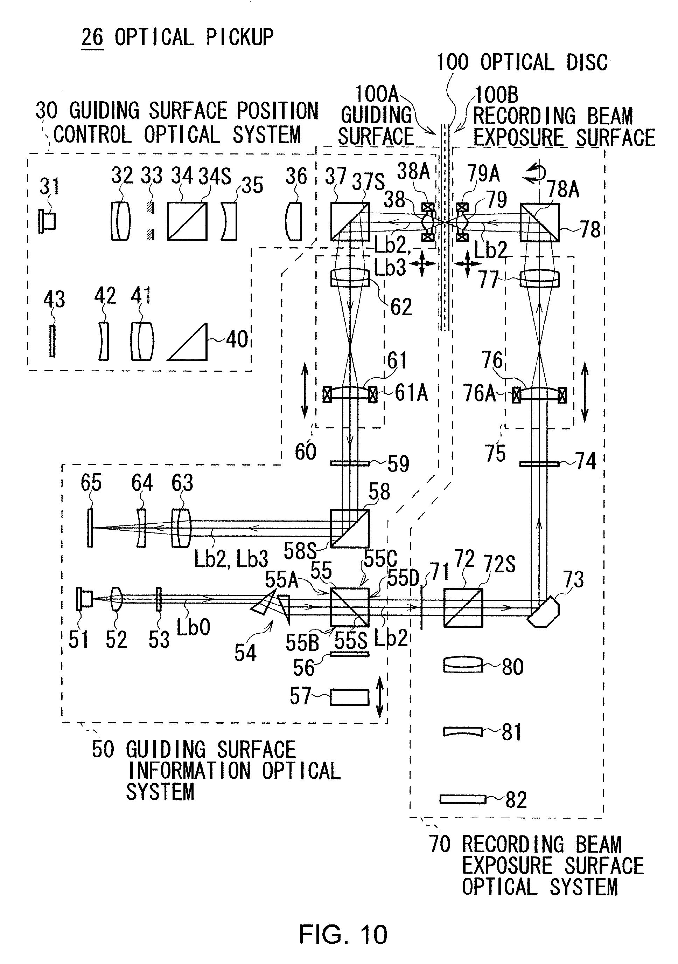

In FIG. 10, a laser diode 51 of the guiding surface information optical system 50 is capable of emitting the blue laser beam with a wavelength of approximately 405 nm. In reality, the laser diode 51, under the control of the control section 21 (FIG. 5) emits the divergent blue optical beam Lb0 to a collimator lens 52. The collimator lens 52 converts the blue optical beam Lb0 from divergent light to collimated light, which is then supplied to a half wave length plate 53.

At this time the polarization direction of the blue optical beam Lb0 is rotated by a predetermined angle by the half wave length plate 53, which adjusts the rate of p-polarized components to s-polarized components. After its intensity distribution is modified by an anamorphic prism 54, the beam enters the surface 55A of the polarizing beam splitter 55.

The polarizing beam splitter 55 includes a reflection and transmission plane 55S which reflects or transmits the optical beams at a different ratio depending on the polarized direction of the beams: For example, the reflection and transmission plane 55S reflects about 50 percent of the p-polarized optical beam and transmits the rest of the p-polarized optical beam therethrough, while it transmits almost 100 percent of the s-polarized optical beam therethrough.

In reality, the reflection and transmission plane 55S of the polarizing beam splitter 55 reflects about 50 percent of the p-polarized blue optical beam Lb0 and leads it to a quarter wave length plate 56 via the surface 55B. The reflection and transmission plane 55S transmits the rest of the beam and leads it to a shutter 71 via the surface 55D. The blue optical beam reflected by the reflection and transmission plane 55S will be also referred to as blue optical beam Lb1, while the blue optical beam transmitted through the reflection and transmission plane 55S will be also referred to as blue optical beam Lb2.

The quarter wave length plate 56 converts the blue optical beam Lb1 from linearly-polarized light to circularly-polarized light and leads it to a movable mirror 57. After the movable mirror 57 reflects the blue optical beam Lb1, the quarter wave length plate 56 converts it from the circularly-polarized light to linearly-polarized light and leads it to the surface 55B of the polarizing beam splitter 55 again.

At this time, for example, the blue optical beam Lb1 is converted by the quarter wave length plate 56 from p-polarized light to left-handed circularly-polarized light. When it is reflected by the movable mirror 57, it is converted from left-handed circularly-polarized light to right-handed circularly-polarized light. After that, it is converted by the quarter wave length plate 56 from the right-handed circularly-polarized light to s-polarized light. This means that the polarization direction of the blue optical beam Lb1 when it emerges from the surface 55B is different from when it enters the surface 55B after being reflected by the movable mirror 57.

In accordance with the polarization direction of the blue optical beam Lb1 that enters from the surface 55B (s-polarized), the reflection and transmission surface 55S of the polarizing beam splitter 55 transmits the blue optical beam Lb1 therethrough, and leads it to a polarizing beam splitter 58 via the surface 55C.

That means that, in the guiding surface information optical system 50, the optical path of the blue optical beam Lb1 has been extended by the polarizing beam splitter 55, the quarter wave length plate 56 and the movable mirror 57.

The reflection and transmission plane 58S of the polarizing beam splitter 58, for example, reflects almost 100 percent of the p-polarized optical beam while transmitting almost 100 percent of the s-polarized optical beam. In reality, the reflection and transmission plane 58S of the polarizing beam splitter 58 transmits the blue optical beam Lb1 therethrough. After that, the blue optical beam Lb1 is converted by the quarter wave length plate 59 from linearly-polarized light (s-polarized light) to circularly-polarized light (right-handed circularly-polarized light), and then led to a relay lens 60.

In the relay lens 60, a movable lens 61 converts the blue optical beam Lb1 from collimated light to convergent light, which is then converted into the divergent blue optical beam Lb1. A fixed lens 62 converts it into convergent light again, and leads it to the dichroic prism 37.

Here, the movable lens 61 can be moved by an actuator 61A in the direction of the optical axis of the blue optical beam Lb1. In reality, the relay lens 60, under the control of the control section 21 (FIG. 5), controls the actuator 61A to move the movable lens 61 in order to change the convergent state of the blue optical beam Lb1 emerging from the fixed lens 62.

In accordance with the wavelength of the blue optical beam Lb1, the reflection and transmission plane 37S of the dichroic prism 37 reflects the blue optical beam Lb1 and leads it to the first objective lens 38. Incidentally, the polarization direction of the circularly-polarized blue optical beam Lb1 is inverted when being reflected by the reflection and transmission plane 37S, from right-handed circularly-polarized light to left-handed circularly-polarized light, for example.

The first objective lens 38 collects the blue optical beam Lb1, and leads it to the guiding surface 100A of the optical disc 100. Incidentally, as for the blue optical beam Lb1, the first objective lens 38 serves as a collection lens with an numerical aperture of 0.5, due to the optical distance from the relay lens 60 and the like.

At this time, as illustrated in FIG. 4B, the blue optical beam Lb1 is transmitted through the base plate 102 and the reflection and transmission film 104 and then is focused on the recording layer 101. The position of the focal point Fb1 of the blue optical beam Lb1 is determined by the convergence state of the beam when it emerges from the fixed lens 62 of the relay lens 60. That is, as the position of the movable lens 61 changes, the focal point Fb1 moves toward the guiding surface 100A or the recording beam exposure surface 100B inside the recording layer 101.

In reality, in the guiding surface information optical system 50, the position of the movable lens 61 is controlled by the control section 21 (FIG. 5). Accordingly, the depth d1 of the focal point Fb1 of the blue optical beam Lb1 (FIG. 4B), or a distance from the reflection and transmission layer 104 to the focal point Fb1, is adjusted inside the recording layer 101 of the optical disc 100. By the way, the adjustment method regarding the focal point Fb1 of the blue optical beam Lb1 will be described later.

After being focused into the focal point Fb1, the blue optical beam Lb1 is diverged and then passes through the recording layer 101 and the base plate 103. After it emerges from the recording beam exposure surface 100B, the blue optical beam Lb1 enters a second objective lens 79 (described later).

In that manner, in the guiding surface information optical system 50, after entering the optical disc 100 from the guiding surface 100A, the blue optical beam Lb1 is focused such that its focal point FB1 is formed inside the recording layer 101. Moreover, by changing the position of the movable lens 61 of the relay lens 60, the depth d1 of the focal point Fb1 is adjusted.

(3-2-2) Receiving of Blue Optical Beam

By the way, the optical disc 100 is designed to transmit the blue optical beam Lb2, which is the beam emitted toward the recording beam exposure surface 100B from the second objective lens 79 of the recording beam exposure surface optical system 70. The blue optical beam Lb2 then emerges from the guiding surface 100A as divergent light (described later). Incidentally, the blue optical beam Lb2 is circularly-polarized light (right-handed circularly-polarized light, for example).

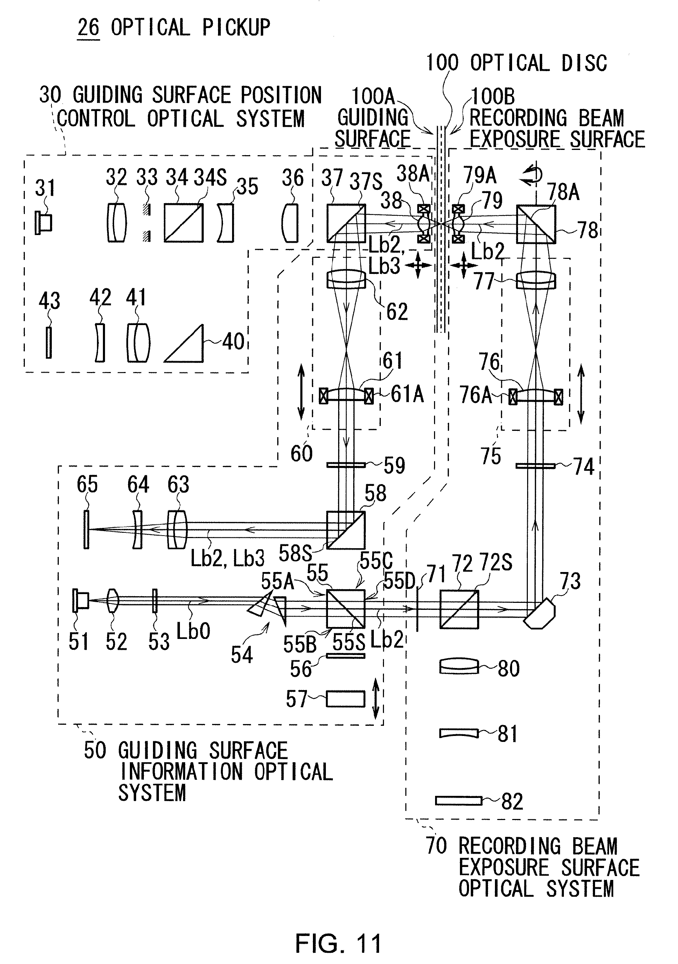

At this time, in the guiding surface information optical system 50, as shown in FIG. 11, after the blue optical beam Lb2 is converged by the first objective lens 38 to a certain extent, it is reflected by the dichroic prism 37 and enters the relay lens 60. Incidentally, when being reflected by the reflection and transmission plane 37S, the polarization direction of the circularly-polarized blue optical beam Lb2 is inverted by the reflection and transmission plane 37S, from the right-handed circularly-polarized light to left-handed circularly-polarized light.

Subsequently, the blue optical beam Lb2 is converted by the fixed lens 62 and movable lens 61 of the relay lens 60 into collimated light. Moreover, it is converted by the quarter wave length plate 59 from circularly-polarized light (left-handed circularly-polarized light) to linearly-polarized light (p-polarized light) before reaching the polarizing beam splitter 58.

In accordance with the polarization direction of the blue optical beam Lb2, the polarizing beam splitter 58 reflects the blue optical beam Lb2 and leads it to a collection lens 63. The collection lens 63 collects the blue optical beam Lb2 and projects it onto a photodetector 65 via a cylindrical lens 64, which causes astigmatism.

Incidentally, the optical components of the guiding surface information optical system 50 are arranged so that the blue optical beam Lb2 is focused on the photodetector 65.

The photodetector 65 detects the amount of light of the blue optical beam Lb2 and then generates a reproduction detection signal SDp, which is based on the amount of light it has detected. The photodetector 64 supplies the reproduction detection signal SDp to the signal processing section 23 (FIG. 5).

However, the reproduction detection signal SD may not be used for any purpose. Accordingly, the signal processing section 23 (FIG. 5) does not perform any process for the reproduction detection signal SDp supplied.

On the other hand, if the recording mark RM is recorded on the recording layer 101 and the focal point Fb1 of the blue optical beam Lb1 is focused on the recording mark RM, the optical disc 100 causes a blue reproduction optical beam Lb3 from the recording mark RM due to its characteristics as a hologram.

According to the principle of hologram, the blue reproduction optical beam Lb3 represents the blue optical beam Lb2, an optical beam emitted when the blue optical beam Lb1 was recording the recording mark RM. Accordingly, the blue optical beam Lb3 travels the same optical path as that of the blue optical beam Lb2 inside the guiding surface information optical system 50, and finally reaches the photodetector 65.

As mentioned above, the optical components of the guiding surface information optical system 50 are arranged so that the blue optical beam Lb2 is focused on the photodetector 65. Accordingly, the blue reproduction optical beam Lb3 is focused on the photodetector 65 as well.

The photodetector 65 detects the amount of light of the blue optical beam Lb3, generates a reproduction detection signal SDp according to the amount of light it has received, and supplies it to the signal processing section 23 (FIG. 5).

In this case, the reproduction detection signal SDp represents the information recorded on the optical disc 100. Therefore, the signal processing section 23 performs predetermined processes, such as demodulation and decoding, to the reproduction detection signal SDp to generate reproduced information, and then supplies the reproduced information to the control section 21.

In this manner, the guiding surface information optical system 50 receives the blue optical beam Lb2 or Lb3, which travels from the guiding surface 100A of the optical disc 100 to the first objective lens 38, and supplies the result of receiving the beam to the signal processing section 23.

(3-3) Configuration of Recording Beam Exposure Surface Optical System

The recording beam exposure surface optical system 70 (FIG. 7) is designed to emit the blue optical beam Lb2 to the recording beam exposure surface 100B of the optical disc 100. The recording beam exposure surface optical system 70 is also designed to receive the blue optical beam Lb1 from the guiding surface information optical system 50 after it passes through the optical disc 100.

(3-3-1) Emitting of Blue Optical Beam

With reference to FIG. 11, as mentioned above, the reflection and transmission plane 55S of the polarizing beam splitter 55 of the guiding surface information optical system 50 transmits about 50 percent of the p-polarized blue optical beam Lb0 and then leads it, as the blue optical beam Lb2, to the shutter 71 via the surface 55D.

The shutter 71, under the control of the control section 21 (FIG. 5), either blocks the blue optical beam Lb2 or allows it to pass therethrough. If the blue optical beam Lb2 is allowed to pass therethrough, it then reaches a polarizing beam splitter 72.

Incidentally, the shutter 71 may be a mechanical shutter, which uses a blocking plate to block the blue optical beam Lb2, a liquid crystal shutter, which applies a different voltage to its liquid crystal panel to block or allow the blue optical beam Lb2, or the like.

A reflection and transmission plane 72S of the polarizing beam splitter 72 transmits about 100 percent of the p-polarized optical beam while reflecting about 100 percent of the s-polarized optical beam. In reality, the polarizing beam splitter 72 transmits the p-polarized blue optical beam Lb2 therethrough, and leads it to a mirror 73, which then reflects it toward a quarter wave length plate 74. The quarter wave length plate 74 transforms it from linearly-polarized light (p-polarized light) to circularly-polarized light (left-handed circularly-polarized light), and leads it to a relay lens 75.

The relay lens 75 has substantially the same configuration as the relay lens 60. The relay lens 75 includes the movable lens 76, the actuator 76A and the fixed lens 77, which are the equivalents of the movable lens 61, the actuator 61A and the fixed lens 62, respectively.

In the relay lens 75, the movable lens 76 converts the blue optical beam Lb2 from collimated light to convergent light, which is then diverged. The divergent blue optical beam Lb2 is converted by the fixed lens 77 into convergent light again, and is led to a galvano mirror 78.

Moreover, in a similar way to that of the relay lens 60, the relay lens 75, under the control of the control section 21 (FIG. 5), controls the actuator 76A to move the movable lens 76, and thereby changes the convergence state of the blue optical beam Lb2 emerging from the fixed lens 77.

The galvano mirror 78 reflects the blue optical beam Lb2, which then enters the second objective lens 79. Incidentally, when being reflected, the polarization direction of the circularly-polarized blue optical beam Lb2 is inverted, from left-handed circularly-polarized light to right-handed circularly-polarized light, for example.

The galvano mirror 78 is capable of changing the angle of a reflection plane 78A. Under the control of the control section 21 (FIG. 5), the galvano mirror 78 adjusts the angle of the reflection plane 78A to change the traveling direction of the blue optical beam Lb2.

The second objective lens 79 and a two-axis actuator 79A are put together in one unit. In a similar way to that of the first objective lens 38, the two-axis actuator 79A moves the second objective lens 79 in the focus direction, or a direction along which it moves close to or away from the optical disc 100, and in the tracking direction, or a direction along which it moves toward the innermost or peripheral portion of the optical disc 100.

The second objective lens 79 collects the blue optical beam Lb2 and then leads it to the recording beam exposure surface 100B of the optical disc 100. The configuration of the second objective lens 79 will be described later.

At this time, as illustrated in FIG. 4B, the blue optical beam Lb2 is transmitted through the base plate 103 and focused on the recording layer 101. The position of the focal point Fb2 of the blue optical beam Lb2 is determined by the convergence state of the beam emerging from the fixed lens 77 of the relay lens 75. Accordingly, like the focal point Fb1 of the blue optical beam Lb1, the focal point Fb2 moves toward the guiding surface 100A or the recording beam exposure surface 100B inside the recording layer 101 as the movable lens 76 moves.

More specifically, the recording beam exposure surface optical system 70, like the guiding surface information optical system 50, is designed such that the traveling distance of the movable lens 76 is substantially proportional to the traveling distance of the focal point Fb2. For example, when the movable lens 76 moves 1 mm, the focal point Fb2 of the blue optical beam Lb2 moves 30 μm.

In reality, in the recording beam exposure surface optical system 70, the control section 21 (FIG. 5) controls the position of the movable lens 61 of the relay lens 60 and the position of the movable lens 76 of the relay lens 75 to adjust the depth d2 of the focal point Fb2 of the blue optical beam Lb2 inside the recording layer 101 of the optical disc 100 (FIG. 4B).

At this time, in the optical disc device 20, under the assumption that the axial run-out of the optical disc 100 or the like would not occur (i.e. under the ideal state), the control section 21 (FIG. 5) controls such that the focal point Fb1 of the blue optical beam Lb1 in the recording layer 101 is being aligned with the focal point Fb2 of the blue optical beam Lb2 when both the first and second objective lens 38 and 79 are at their reference positions.

After the blue optical beam Lb2 is being focused on the focal point Fb2, it is diverged while traveling through the recording layer 101, the reflection and transmission film 104 and the base plate 102. After emerging from the guiding surface 100A, the blue optical beam Lb2 enters the first objective lens 38.

In that manner, in the recording beam exposure surface optical system 70, the blue optical beam Lb2 is emitted to the optical disc 100 from the side of the recording beam exposure surface 100B and the focal point Fb2 of the blue optical beam Lb2 is placed inside the recording layer 101. Moreover, by controlling the position of the movable lens 76 of the relay lens 75, the depth d2 of the focal point Fb2 is adjusted.

(3-3-2) Receiving of Blue Optical Beam

By the way, the blue optical beam Lb1 that emerges from the first objective lens 38 of the guiding surface information optical system 50 is converged inside the recording layer 101 of the optical disc 100, as mentioned above, before entering the second objective lens 79 as divergent light.

At this time, in the recording beam exposure surface optical system 70, the blue optical beam Lb1 is converged by the second objective lens 79 to a certain extent. And then, it is reflected by the galvano mirror 78 before entering the relay lens 75. Incidentally, when being reflected by the reflection plane 78S, the polarization direction of the circularly-polarized blue optical beam Lb1 is inverted, from left-handed circularly-polarized light to right-handed circularly-polarized light.

Subsequently, the blue optical beam Lb1 is converted by the fixed lens 77 and movable lens 76 of the relay lens 75 into collimated light. Moreover, it is converted by the quarter wave length plate 74 from circularly-polarized light (right-handed circularly-polarized light) to linearly-polarized light (s-polarized light) and is reflected by a mirror 73 before reaching the polarizing beam splitter 72.

In accordance with the polarization direction of the blue optical beam Lb1, the polarizing beam splitter 72 reflects the blue optical beam Lb1 and leads it to a collection lens 80. The collection lens 80 converges the blue optical beam Lb1 and projects it onto a photodetector 82 after astigmatism is added by a cylindrical lens 81.

However, there is a possibility that the axial run-out of the optical disc 100 could happen. Accordingly, the guiding surface position control optical system 30 and the drive control section 22 (FIG. 5) perform the focus and tracking control of the first objective lens 38.

At this time, the focal point Fb1 of the blue optical beam Lb1 moves as the first objective lens 38 moves. Accordingly, it moves away from a position where the focal point Fb2 of the blue optical beam Lb2 exists when the second objective lens 79 is at its reference position.

Accordingly, the arrangement of the optical components are adjusted so that the relative position of the focal point Fb2 of the blue optical beam Lb2 with respect to the focal point Fb1 of the blue optical beam Lb1 inside the recording layer 101 is reflected on the emission state of the optical beam Lb1 projected onto the photodetector 82 after being collected by the objective lens 80.

As shown in FIG. 12, like the photodetector 43, one surface of the photodetector 82, onto which the blue optical beam Lb1 is projected, includes four detection sections 82A, 82B, 82C and 82D, an area divided into four in grid pattern. Incidentally, the direction indicated by arrow a2 (or the horizontal direction in the diagram) corresponds to the traveling direction of the track when the blue optical beam Lb1 is emitted toward the reflection and transmission film 104 (FIG. 4).

The detection sections 82A, 82B, 82C and 82D of the photodetector 82 partially detects the blue optical beam Lb1, generates the detection signals SDAb, SDBb, SDCb and SDDb, which vary according to the amount of light they have detected, and then transmits them to the signal processing section 23 (FIG. 5).

The signal processing section 23 is designed to perform a focus control process employing the so-called astigmatic method. The signal processing section 23 calculates the focus error signal SFEb as follows:

$$SFEb = (SDAb + SDCb) - (SDBb + SDDb) \qquad \cdots\cdots (5)$$

The signal processing section 23 then supplies the focus error signal SFEb to the drive control section 22.

This focus error signal SFEb represents a focus direction's distance from the focal point Fb1 of the blue optical beam Lb1 to the focal point Fb2 of the blue optical beam Lb2.

In addition, the signal processing section 23 is designed to perform the tracking control process using push-pull signals. The signal processing section 23 calculates a tracking error signal STEb as follows:

$$STEb = (SDAb + SDBb) - (SDCb + SDDb) \qquad \cdots\cdots (6)$$

The signal processing section 23 supplies the tracking error signal STEb to the drive control section 22.

This tracking error signal STEb represents a tracking direction's distance from the focal point Fb1 of the blue optical beam Lb1 to the focal point Fb2 of the blue optical beam Lb2.

Furthermore, the signal processing section 23 is designed to generate a tangential error signal, which is used for tangential control. The tangential control is a process of moving the focal point Fb2 of the blue optical beam Lb2 in a direction tangential to the tracks to a target position.

More specifically, the signal processing section 23 is designed to perform a tangential control process using push-pull signals. The signal processing section 23 calculates a tangential error signal SNEb as follows:

$$SNEb = (SDAb + SDDb) - (SDBb + SDCb) \qquad \cdots\cdots (7)$$

The signal processing section 23 then supplies the tangential error signal SNEb to the drive control section 22.

The tangential error signal SNEb represents a tangential direction's distance from the focal point Fb1 of the blue optical beam Lb1 to the focal point Fb2 of the blue optical beam Lb2.

In response, the drive control section 22 generates a focus drive signal SFDb from the focus error signal SFEb, and transmits the focus drive signal SFDb to the two-axis actuator 79A to perform the focus control of the second objective lens 79 so that the focus direction's distance between the focal point Fb1 of the blue optical beam Lb1 and the focal point Fb2 of the optical beam Lb2 decreases.

Moreover, the drive control section 22 generates a tracking drive signal STDb from the tracking error signal STEb, and transmits the tracking drive signal STDb to the two-axis actuator 79A to perform the tracking control of the second objective lens 79 so that the tracking direction's distance between the focal point Fb1 of the blue optical beam Lb1 and the focal point Fb2 of the optical beam Lb2 decreases.

Furthermore, the drive control section 22 generates a tangential drive signal SNDb from the tangential error signal SNEb, and transmits the tangential drive signal SNDb to the galvano mirror 78, which then performs the tangential control process, or adjusting its reflection plane 78A, so that the tangential direction's distance between the focal point Fb1 of the blue optical beam Lb1 and the focal point Fb2 of the optical beam Lb2 decreases.

In that manner, the recording beam exposure surface optical system 70 receives the blue optical beam Lb2, which travels from the recording beam exposure surface 100B of the optical disc 100 to the second objective lens 79, and supplies the result of receiving the beam to the signal processing section 23. In response, the drive control section 22 performs the focus and tracking control processes of the second objective lens 79 and the tangential control process (conducted by the galvano mirror 78) to align the focal point Fb2 of the blue optical beam Lb2 with the focal point Fb1 of the blue optical beam Lb1.

(3-4) Adjustment of Length of Optical Path

By the way, when information are recorded, the optical pickup 26 of the optical disc 20 uses, as mentioned above, the polarizing beam splitter 55 (FIG. 10) to separate the blue optical beams Lb1 and Lb2 from the blue optical beam Lb0, and causes the interference between the blue optical beams Lb1 and Lb2 inside the recording layer 101 of the recording disc 100 to record the recording mark RM at a target mark position inside the recording layer 101.

The coherence length of the blue optical beam Lb0 emitted from the laser diode 51 may need to be more than the size of a hologram, or more than the height RMh of the recording mark RM, to accurately record the recording mark RM on the recording layer 101 o the optical disc 100, according to the general condition related to the formation of hologram.

In reality, like a typical laser diode, the coherence length of the beam emitted from the laser diode 51 substantially corresponds to the result of multiplying the length of a resonator (not shown) inside the laser diode 51 and the refractive index of the resonator: The coherence length may be between 100 $\mu$m and 1 mm.

On the other hand, in the optical pickup 26, the blue optical beam Lb1 travels along the optical path inside the guiding surface information optical system 50 (FIG. 10) and then emerges from the guiding surface 100A of the optical disc 100. And the blue optical beam Lb2 travels along the optical path inside the recording beam exposure surface optical system 70 (FIG. 11) and then emerges from the recording beam exposure surface 100B of the optical disc 100. In this manner, in the optical pickup 26, the optical path of the blue optical beam Lb1 is different from that of the blue optical beam Lb2, and therefore their lengths are different (i.e. the distances from the laser diode 51 to the target mark position).

Moreover, in the optical pickup 26, the positions of the movable lenses 61 and 76 of the relay lenses 60 and 75 are adjusted to change the depth (or target depth) of the target mark position in the recording layer 101 of the optical disc 100. At this time, by changing the depth of the target mark position, the optical pickup 26 essentially changes the lengths of the optical paths of the blue optical beams Lb1 and Lb2.

However, in the optical pickup 26, to produce an interference pattern, the difference between the lengths of the optical paths of the blue optical beams Lb1 and Lb2 may need to be less than the coherence length (approximately 100 $\mu$m to 1 mm).

Accordingly, by controlling the position of the movable mirror 57, the control section 21 (FIG. 5) adjusts the length of the optical path of the blue optical beam Lb1. In this case, based on the relationship between the position of the movable lens 61 of the relay lens 60 and the depth of the target mark position, the control section 21 moves the movable mirror 57 in accordance with the position of the movable lens 61 in order to change the length of the optical path of the blue optical beam Lb1.

As a result, in the optical pickup 26, the difference between the lengths of the optical paths of the blue optical beams Lb1 and Lb2 becomes less than the coherence length. Therefore, a desirable hologram, or a recording mark RM, can be formed at the target mark position inside the recording layer 101.

In that manner, the control section 21 of the optical disc device 20 controls the position of the movable mirror 57 to make the difference between the lengths of the optical paths of the blue optical beams Lb1 and Lb2 less than the coherence length. Therefore, a desirable hologram, or a recording mark RM, can be formed at the target mark position inside the recording layer 101.

(4) Information Recording and Reproduction

(4-1) Information Recording on Optical Disc

When information are recorded on the optical disc 100, the control section 21 of the optical disc 20 (FIG. 5) receives, as mentioned above, an information recording command, a piece of recording information and a piece of recording address information from an external device or the like (not shown). The control section 21 supplies a drive command and the piece of recording address information to the drive control section 22 and the piece of recording information to the signal processing section 23.

At this time, the drive control section 22 uses the guiding surface position control optical system 30 of the optical pickup 26 (FIG. 8) to emit the red optical beam Lr1 toward the guiding surface 100A of the optical disc 100. Based on the result of detecting the reflection, or the red reflection optical beam Lr2, the drive control section 22 performs the focus and tracking control process (i.e. position control) of the first objective lens 38 in order to get the focal point Fr of the red optical beam Lr1 to follow the target track corresponding to the piece of recording address information.

Moreover, the control section 21 uses the guiding surface information optical system 50 (FIG. 10) to emit the blue optical beam Lb1 toward the guiding surface 100A of the optical disc 100. Since it is collected by the first objective lens 38 whose position is being controlled, the focal point Fb1 of the blue optical beam Lb1 is focused on behind the target track.

Furthermore, by controlling the position of the movable lens 61 of the relay lens 60, the control section 21 adjusts the depth d1 of the focal point Fb1 (FIG. 4b) such that it becomes equal to the target depth. As a result, the focal point Fb1 of the blue optical beam Lb1 is focused on the target mark position.

On the other hand, by controlling the shutter 71 of the recording beam exposure surface optical system 70 (FIG. 11), the control section 21 allows the blue optical beam Lb2 to pass therethrough, and leads it to the recording beam exposure surface 100B of the optical disc 100.

Moreover, by adjusting the position of the movable lens 76 of the relay lens 75 with respect to the position of the movable lens 61 of the relay lens 60, the control section 21 adjusts the depth d2 of the blue optical beam Lb2 (FIG. 4B). Therefore, the depth d2 of the focal point Fb2 of the blue optical beam Lb2 is aligned with the depth d1 of the focal point Fb1 of the blue optical beam Lb1 when it is assumed that there is no axial run-out of the optical disc 100.

Furthermore, by using the recording beam exposure surface optical system 70, the control section 21 detects the blue optical beam Lb1 that has passed through the first and second objective lenses 38 and 79. Based on the result of detection, the drive control section 22 performs the focus and tracking control processes (i.e. position control processes) of the second objective lens 79 and the tangential control process of the galvano mirror 78.

As a result, the focal point Fb2 of the blue optical beam Lb2 is focused on the position of the focal point Fb1 of the blue optical beam Lb1, or the target mark position.

In addition, the control section 21 adjusts the position of the movable mirror 57 based on the position of the movable lens 61 of the relay lens 60 to make the difference between the length of the optical path of the blue optical beam Lb1 and that of the blue optical beam Lb2 less than the coherence length.

Therefore, the control section 21 of the optical disc device 20 can form a proper recording mark RM at the target mark position inside the recording layer 101 of the optical disc 100.

By the way, the signal processing section 23 (FIG. 5) generates a recording signal, which for example represents binary data having a value of "0" or "1", from the piece of recording information supplied from an external device or the like (not shown). When the recording signal represents a value of "1", the laser diode 51 for example emits the blue optical beam Lb0. Whereas when the recording signal represents a value of "0", the laser diode 51 does not emit the blue optical beam Lb0.

Accordingly, when the recording signal represents a value of "1", the optical disc device 20 produces a recording mark RM at a target mark position inside the recording layer 101 of the optical disc 100. Whereas when the recording signal represents a value of "0", the optical disc device 20 does not produce a recording mark RM at a target mark position. In this manner, the value "0" or "1" of the recording signal is recorded by producing or not producing the recording mark RM at the target mark position. As a result, the recording information is recorded on the recording layer 101 of the optical disc 100.

(4-2) Information Reproduction from Optical Disc

When the information is reproduced from the optical disc 100, the control section 21 of the optical disc device 20 (FIG. 5) controls the guiding surface position control optical system 30 of the optical pickup 26 (FIG. 8) to emit the red optical beam Lr1 to the guiding surface 100A of the optical disc 100. Based on the result of detecting the reflection, or the red reflection optical beam Lr2, the drive control section 22 performs the focus and tracking control process of the first optical lens 38 (i.e. position control processes).

Moreover, the control section 21 uses the guiding surface information optical system 50 (FIG. 10) to emit the blue optical beam Lb1 to the guiding surface 100A of the optical disc 100. At this time, since it is collected by the first objective lens 38 whose position is being controlled, the focal point Fb1 of the blue optical beam Lb1 is focused on behind the target track.

Incidentally, during a reproduction process, the control section 21 controls the emission power of the laser diode 51 to prevent the recording mark RM from being removed accidentally by the blue optical beam Lb1.

Moreover, the control section 21 adjusts the position of the movable lens 61 of the relay lens 60 to align the depth d1 of the focal point Fb1 (FIG. 4B) with the target depth. As a result, the focal point Fb1 of the blue optical beam Lb1 is aligned with the target mark position.

On the other hand, the control section 21 controls the shutter 71 of the recording beam exposure surface optical system 70 (FIG. 11) to block the blue optical beam Lb2. As a result, the blue optical beam Lb2 does not strike the optical disc 100.

That means that the optical pickup 26 only allows, as a reference beam, the blue optical beam Lb1 to reach the recording mark RM that is recorded on the target mark position in the recording layer 101 of the optical disc 100. In response, the recording mark RM serves as a hologram, causing, as a reproduction beam, the blue reproduction optical beam Lb3 toward the guiding surface 101A. At this time, the guiding surface information optical system 50 detects the blue reproduction optical beam Lb3 and then generates a detection signal from the result of detection.

In this manner, the control section 21 of the optical disc 20 causes the recording mark RM, which is recorded on the target mark position in the recording layer 101 of the optical disc 100, to emit the blue reproduction optical beam Lb3, and receives it. Therefore, the control section 21 detects the recording mark RM recorded.

If there is no recording mark RM at the target mark position, the blue reproduction optical beam Lb3 does not come out of the target mark position. In this case, the guiding surface information optical system 50 of the optical disc device 20 generates a detection signal indicating the fact that it has not received the blue reproduction optical beam Lb3.

Based on the detection signals, the signal processing section 23 recognizes whether it has received the blue reproduction optical beam Lb3 or not, or the value of "0" or "1", and then produces the reproduced information from the result of recognition.

In that manner, if there is a recording mark RM at the target mark position in the recording layer 101 of the optical disc 100, the optical disc device 20 receives the blue reproduction optical beam Lb3. Whereas if there is no recording mark RM at the target mark position, the optical disc device 20 does not receive the blue reproduction optical beam Lb3. Accordingly, the optical disc device 20 can recognize the values of "0" or "1" recorded at the target mark positions. Thus, the optical disc device 20 can reproduce information from the recording layer 101 of the optical disc 100.

(5) Reducing Burden for Tracking Control

As described above, the recording mark RM is only produced where an area around the focal point Fb1 of the blue optical beam Lb1 (also referred to as "focal point surrounding area Af1") is overlapped with an area around the focal point Fb2 of the blue optical beam Lb2 (also referred to as "focal point surrounding area Af2").

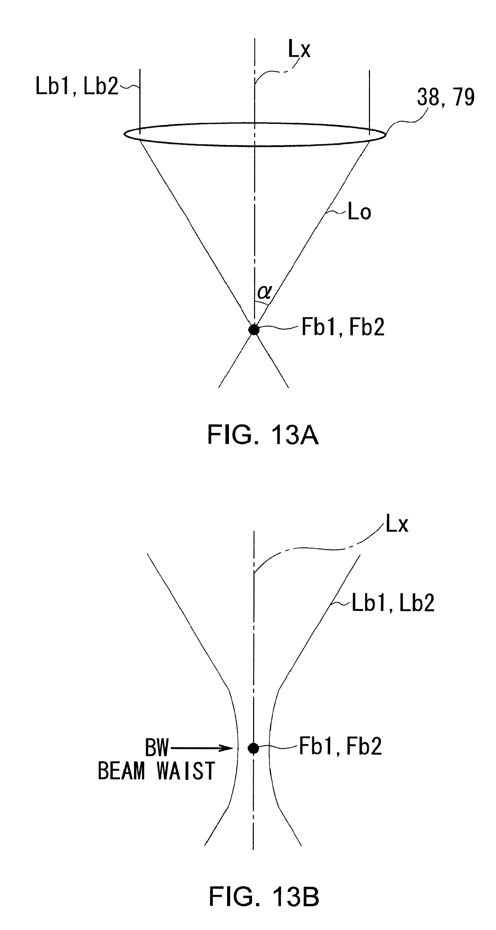

Here, as shown in FIG. 13A, if it is assumed that there is no diffraction phenomenon regarding the blue optical beams Lb1 and Lb2, the focal points Fb (Fb1 and Fb2) are the imaging points formed on the optical axis Lx of the optical beams Lb1 and Lb2 collected by the first and second objective lens 38 and 79.

Moreover, an angle of the optical axis Lx of the blue optical beams Lb1 and Lb2 relative to the outline (or outermost circumference) Lo (Lo1 and Lo2) of the blue optical beams Lb1 and Lb2 is also referred to as beam collection angle $\alpha$ (a first beam collection angle $\alpha1$ and a second beam collection angle $\alpha2$).

In reality, as shown in FIG. 13B, the focal points Fb1 and Fb2 of the blue optical beam Lb1 and Lb2 are actually not dots thanks to diffraction phenomena. An intersection of the optical axis Lx and a beam waist BW where the blue optical beams Lb1 and Lb2 have the smallest diameter is regarded as the focal points Fb1 and Fb2 of the blue optical beams Lb1 and Lb2.

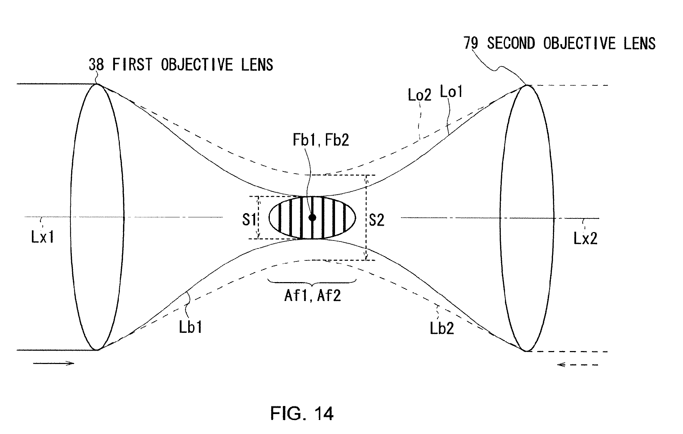

As shown in FIG. 14, the optical disc device 20 is designed so that the diameter of the blue optical beam Lb2 around the focal point Fb2 (also referred to as "beam waist diameter S2") becomes larger than the diameter of the blue optical beam Lb1 around the focal point Fb1 (also referred to as "beam waist diameter S1"). This ensures that the focal point surrounding area Af1 is overlapped with the focal point surrounding area Af2.

In the optical disc device 20, the numerical aperture NA of the first objective lens 38 is set at around 0.5 whereas the numerical aperture NA of the second objective lens 79 is set at around 0.25, almost half the numerical aperture NA of the first objective lens 38. Accordingly, the second beam collection angle $\alpha2$ of the blue optical beam Lb2 collected by the second objective lens 79 becomes smaller than the first beam collection angle $\alpha1$ of the blue optical beam Lb1 collected by the first objective lens 38. Incidentally, the refractive index n of the second lens 79 is the same as that of the first objective lens 38, or 1.5.

As a result, in the optical disc device 20, according to the equation (2), the beam waist diameter S1 of the blue optical beam Lb1 is about 1 $\mu$m while the beam waist diameter S2 of the blue optical beam Lb2 is two times as large as the beam waist diameter S1, about 2 $\mu$m.

In this case, the beam waist diameter S1 is smaller than the beam waist diameter S2. It means that only the focal point surrounding area Af1 (where the blue optical beam Lb1 exists along the cross sectional direction of the beam) is where the focal point surrounding areas Af1 and Af2 overlap with one another. Accordingly, the recording mark RM is produced in the focal point surrounding areas Af1.

Accordingly, in the optical disc device 20, the size of the recording mark RM recorded on the recording layer 101 is determined by the beam waist diameter S1 of the blue optical beam Lb1, and it is the same size as a recording mark that is produced by putting together two optical beams of the same beam waist diameter S1. Thus, the recording density of the optical disc 100 can be maintained.

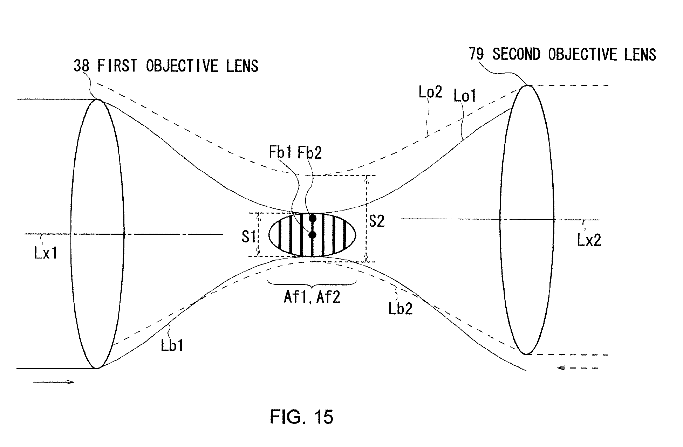

Moreover, for example, as shown in FIG. 15, since the beam waist diameter S2 is larger than the beam waist diameter S1, the focal point surrounding area Af1 can be regarded as where the focal point surrounding areas Af1 and Af2 overlap with one another as long as the outline portion Lo2 of the optical beam Lb2 around the focal point surrounding area Af2 covers the outline portion Lo1 of the blue optical beam Lb1, even if the optical axis Lx1 of the blue optical beam Lb1 is not aligned with the optical axis Lx2 of the blue optical beam Lb2. This ensures that the recording mark RM with the beam waist diameter S1 is recorded.

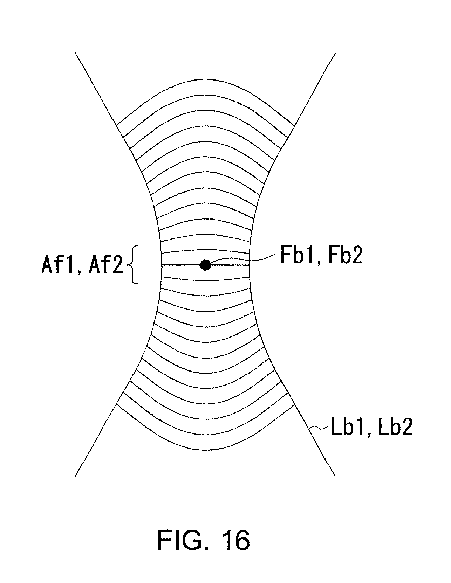

Here, as shown in FIG. 16, the wave fronts of the blue optical beams Lb1 and Lb2 are substantially flat around the focal point surrounding areas Af1 and Af2. However, they become curved as they move away from the focal points Fb2 and Fb2. The pattern of the wave front is reflected on a hologram that is produced where the focal point surrounding areas Af1 and Af2 overlap with one another: If the wave fonts are flat, the recording mark RM produced has a pattern of flat waves. Whereas if the wave fronts are curved, the recording mark RM produced has a pattern of curved waves. For ease of explanation, the figure represents that the blue optical beams Lb1 and Lb2 have the same diameter, although the reality is different.

In the optical disc device 20, the relay lenses 60 and 75 adjust the convergence state of the blue optical beams Lb1 and Lb2 to align both the focal points Fb1 and Fb2 with the target depth. Accordingly, the focal point surrounding areas Af1 and Af2 of the blue optical beams Lb1 and Lb2 overlap with one another, producing the recording mark RM having a flat striped pattern on the recording layer 101.

Therefore, in the optical disc device 20, during a reproduction process, the recording mark RM does not diffuse the blue optical beam Lb1: The recording mark RM produces an appropriate blue reproduction optical beam Lb3.

By the way, the optical disc device 20 drives the first objective lens 38 so as to emit the blue optical beam Lb1 to the target track with respect to a groove formed on the reflection and transmission film 104, as described above. On the other hand, the optical disc device 20 drives the second objective lens 79 to perform the tracking control process, by which the optical axis Lx1 of the blue optical beam Lb1 is aligned with the optical axis Lx2 of the blue optical beam Lb2. As a result, the blue optical beams Lb1 and Lb2 strike the target track.

If the beam waist diameter S1 is the same as the beam waist diameter S2, the optical axes Lx1 and Lx2 should be precisely aligned with one another to record the recording mark RM whose diameter is the same as the beam waist diameter S1.

By contrast, in the optical disc device 20, since the beam waist diameter S2 is larger than the beam waist diameter S1, the focal point surrounding area Af1 can be overlapped with the focal point surrounding area Af2 as long as the outline portion Lo2 of the optical beam Lb2 contains the outline portion Lo1 of the blue optical beam Lb1, even if the second objective lens 79 fails to operate to align the optical axis Lx1 of the blue optical beam Lb1 with the optical axis Lx2 of the blue optical beam Lb2. This ensures that the recording mark RM with the beam waist diameter S1 is recorded on the recording layer 101 at the target position.

Moreover, the beam waist diameter S1 is half the beam waist diameter S2. Accordingly, the cross sectional area of the beam of the focal point surrounding area Af1 is about a quarter of that of the focal point surrounding area Af2 ($1/2^2$).

The optical disc device 20 is designed so that the intensity of the blue optical beam Lb1 when it is entering the first objective lens 38 (also referred to as "first objective lens incident intensity PW1) becomes about a quarter of the intensity of the blue optical beam Lb2 when it is entering the second objective lens 79 (also referred to as "second objective lens incident intensity PW2). Therefore, the blue optical beams Lb1 and Lb2 around the focal point surrounding areas Af1 and Af2 have substantially the same optical intensity (power and density) per unit area. This improves the interference characteristics, and produces a clear hologram or recording mark RM.

More specifically, by adjusting the ratio of p-polarized beam to s-polarized beam through the half wave length plate 53 and separating the p-polarized beam from the s-polarized beam through the beam splitter 55, the optical disc device 20 leads about 25 percent of the blue optical beam Lb0 to the quarter wave length plate 56 of the guiding surface information optical system 50 as the blue optical beam Lb1 while leading the rest of it, or about 75 percent of the blue optical beam Lb0, to the recording beam exposure surface optical system 70 as the blue optical beam Lb2.

Moreover, the recording beam exposure surface optical system 70 of the optical disc device 20 is designed to maintain the intensity of the s-polarized optical beam Lb2 before leading it to the second objective lens 79.

As a result, in the optical disc device 20, the first objective lens incident intensity PW1 becomes about a quarter of the second objective lens incident intensity PW2. Therefore, the optical power and density levels around the focal point surrounding areas Af1 and Af2 will be substantially the same.

Furthermore, when reproducing information from the optical disc 100, the optical disc device 20 emits the blue optical beam Lb1 to the optical disc 100 via the first objective lens 38 (FIG. 12), and the photodetector 65 receives the blue reproduction optical beam Lb3, or the reflection of the blue optical beam Lb1 from the optical disc 100.

In this case, in the optical disc device 20, compared to when the blue optical beam Lb2 is emitted through the second objective lens 79, the beam waist diameter S1 is smaller than the beam waist diameter S2. This reduces so called crosstalk, preventing the blue optical beam Lb1 from being reflected by the recording mark RM adjacent to the target mark position. This makes it possible to shorten the distance between neighboring recording marks RM to increase the recording density.

In that manner, in the optical disc device 20, the beam waist diameter S2 is larger than the beam waist diameter S1 of the blue optical beam Lb1. This ensures that the recording mark RM is produced even if the optical axis Lx1 of the blue optical beam Lb1 is not perfectly aligned with the optical axis Lx2 of the blue optical beam Lb2. This reduces the burden related to the tracking control process, a process that tries to align the optical axis Lx1 of the blue optical beam Lb1 with the optical axis Lx2 of the blue optical beam Lb2.

(6) Operation and Effect

The optical disc device 20 with the above configuration divides the blue optical beam Lb0 emitted from a beam source, or the laser diode 51, into a first beam, or the blue optical beam Lb1, and a second beam, or the blue optical beam Lb2, and emits the blue optical beam Lb1 to one side of the optical disc 100 (or an optical information recording medium) and the blue optical beam Lb2 to the other side such that the blue optical beam Lb1 is aligned with the blue optical beam Lb2 inside the optical disc 100. This produces a hologram, or a recording mark RM.

At this time, the optical disc device 20 collects and emits the blue optical beam Lb1 to the optical disc 100, moves the focal point Fb1 such that the focal point Fb1 of the blue optical beam Lb1 is positioned at the target depth, which represents a depth at which the recording mark RM should be formed in terms of the direction of depth along which it moves close to or away from the optical disc 100, and is aligned with the target track, which represents a track where the recording mark RM should be formed in terms of the tracking direction parallel to both sides of the optical disc 100, makes, when collecting and emitting the blue optical beam Lb2 to the optical disc 200, the second beam collection angle $\alpha2$ of the optical axis Lx2 of the blue optical beam Lb2 emitted to the optical disc 100 relative to the outline Lo2 smaller than the first beam collection angle $\alpha1$ of the optical axis Lx1 of the blue optical beam Lb1 emitted to the optical disc 100 relative to the outline Lo1 in order to make the beam waist diameter S2 of the focal point Fb2 larger than the beam waist diameter S1 of the focal point Fb1, and moves the focal point Fb2 so that the focal point Fb2 is focused on at the target depth and the blue optical beam Lb2 strikes the target track.

Accordingly, the optical disc device 20 can produce the recording mark RM corresponding to the focal point Fb1 at the target mark position as long as the blue optical beam Lb2 strikes the target mark position. This means that the focal point Fb2 is not necessarily aligned with the target track precisely, and therefore reduces the burden related to the servo control.

Moreover, by controlling the two-axis actuator 79A that drives the second objective lens 79 to align the optical axis Lx2 of the blue optical beam Lb2 with the optical axis Lx1 of the blue optical beam Lb1, the optical disc device 20 emits the blue optical beam Lb2 to the target track.

Accordingly, if the optical axis Lx1 of the blue optical beam Lb1 is precisely aligned with the optical axis Lx2 of the blue optical beam Lb2, the optical disc device 20 follows the motion of the blue optical beam Lb1 and this may increase the burden related to the servo control compared to the blue optical beam Lb1. However, the optical disc device 20 does not have to align the optical axis Lx1 with the optical axis Lx2 precisely. Therefore, the burden related to the servo control can be reduced.

Furthermore, the optical disc device 20 is designed so that the optical power and density of the blue optical beam Lb2 around the focal point Fb2 substantially becomes the same as that of the blue optical beam Lb1 around the focal point Fb1. This improves the interference characteristics of the blue optical beams Lb1 and Lb2 and thereby produces the recording marks RM with good reproduction characteristics.

According to the above configuration, the beam waist diameter S2 of the blue optical beam Lb2 is larger than the beam waist diameter S1 of the blue optical beam Lb1. In addition, the focal point Fb1 of the blue optical beam Lb1 is aligned with the target mark position while the blue optical beam Lb2 is emitted to the target mark position such that the focal point Fb2 of the blue optical beam Lb2 is close to the target mark position. Accordingly, the recording mark whose size is determined by the first beam is recorded at the target position, even if the focal point of the first beam is not accurately aligned with the focal point of the second beam. The recording mark RM with the beam waist diameter S1 can be formed at the target mark position, while the burden related to the servo control of the blue optical beam Lb2 can be reduced. Thus, an optical information recording device, optical pickup, optical information recording method and optical information recording medium capable of reducing burden imposed on the servo control can be realized.

(7) Other Embodiments

In the above-noted embodiment, the second objective lens 79 is driven in the tracking direction to align the optical axis Lx1 of the blue optical beam Lb1 with the optical axis Lx2 of the blue optical beam Lb2. However, the present invention is not limited to this. For example, the second objective lens 79 may be driven according to the tracking error signal STEb, in a similar way to the first objective lens 38.

In this case, if the optical disc 100 is skewed or bent, the focal point Fb2 of the blue optical beam Lb2 could slightly move away from the target mark position. However there is no problem as long as the focal point Fb2 of the blue optical beam Lb2 emitted is close to the target mark position and the focal point surrounding areas Af1 and AF2 overlap with one another.

That is, if the blue optical beam Lb1 whose beam waist diameter S1 is small is emitted such that its focal point Fb1 is precisely aligned with the target mark position, the recording mark RM is precisely formed at the target mark position according to the blue optical beam Lb1.

Therefore, the device does not need some optical components (such as the polarizing beam splitter 72, the multi lens 80, the cylindrical lens 81 and the photodetector 82) to align the optical axis Lx2 of the blue optical beam Lb2 with the optical axis Lx1 of the blue optical beam Lb1. As a result, its structure can be simplified.

Moreover, in the above-noted embodiment, the numerical aperture NA of the second objective lens 79 is smaller than the numerical aperture NA of the first objective lens 38; and the convergence state of the blue optical beam Lb2 is adjusted by the relay lens 75 to make the second beam collection angle α2 smaller than the first beam collection angle α1 and focus the focal point Fb2 on at the target depth. However the present invention is not limited to this. The same lens as the first lens 38 may be used as the second objective lens 79; and an optical component (such as a certain type of lens or aperture) may be provided such that it is followed by the second objective lens 79 to make the diameter of the blue optical beam Lb2 entering the second objective lens 79 smaller than that of the blue optical beam Lb1 entering the first objective lens. This also offers the same effect as the above-noted embodiment.

Moreover, the refractive indexes and numerical apertures NA of the first and second objective lens 38 and 79 and the convergence state and diameter of the blue optical beams Lb1 and Lb2 entering the first and second objective lenses 38 and 79 can be adjusted to make the second beam collection angle α2 smaller than the first beam collection angle α1 and to focus the focal point Fb2 on at the target depth.

Furthermore, in the above-noted embodiment, the second beam collection angle α2 is about half the first beam collection angle α1. However, the present invention is not limited to this. The second beam collection angle α2 may be set at another value, depending on various kinds of situation, such as the accuracy of the tracking control of the blue optical beam Lb2, a measure of how much the optical disc 100 is bent, and the intensity of the blue optical beam Lb0 emitted.

Furthermore, in the above-noted embodiment, the optical power and density of the blue optical beam Lb1 around the focal point Fb1 is substantially the same as that of the blue optical beam Lb2 around the focal point Fb2. However, the present invention is not limited to this. They may be different.

Furthermore, in the above-noted embodiment, during the reproduction process, the blue optical beam Lb1 whose beam waist diameter S1 is small is emitted to the recording layer 101. However, the present invention is not limited to this. Alternatively, the blue optical beam Lb2 may be emitted to the recording layer 101.

Furthermore, in the above-noted embodiment, the ratio of the blue optical beam Lb1 to the blue optical beam Lb2 is adjusted by the half wave length plate 53 and the polarizing beam splitter 55 to adjust the optical power and density around the focal points Fb1 and Fb2. However, the present invention is not limited to this Various kinds of means can be available, such as a ND filter that cuts the blue optical beam Lb1 at a predetermined ratio.

Furthermore, in the above-noted embodiment, the recording marks RM are formed on the disc-shaped optical disc 100. However, the present invention is not limited to this. The recording marks RM can be formed a rectangular optical information recording medium.

Furthermore, in the above-noted embodiment, the optical disc device 20 (an optical information recording device) includes: the first objective lens 38 and the relay lens 60, which are the equivalent of a first beam collection section; the actuator 38A and the relay lens 60, which are the equivalent of a first focal point shifting section; the second objective lens 79 and the relay lens 75, which are the equivalent of a second beam collection section; and the actuator 79A and the relay lens 75, which are the equivalent of a second focal point shifting section. However, the present invention is not limited to this. The optical information recording device may have a different structure, including the first beam collection section, the first focal point shifting section, the second beam collection section and the second focal point shifting section.

The above method can be applied to an optical disc device that records a large amount of data, such as music content or video content, on an optical disc or a recording medium.

It should be understood by those skilled in the art that various modifications, combinations, sub-combinations and alterations may occur depending on design requirements and other factors insofar as they are within the scope of the appended claims or the equivalents thereof.

**Claims**

1. An optical information recording device that divides a beam emitted from a beam source into a first beam and a second beam, emits the first beam to one side of an optical information recording medium and the second beam to the other side of the optical information recording medium, and forms a recording mark that is a hologram by putting together the first and second beams inside the optical information recording medium, the optical information recording device comprising:

a first beam collection section that collects the first beam and emits the first beam to the optical information recording medium;
a first focal point shifting section that moves a focal point of the first beam so that the focal point of the first beam is positioned at a target depth and is aligned with a target track, the target depth representing a depth at which the recording mark should be formed in terms of the direction of depth along which it moves close to or away from the optical information recording medium and the target track representing a track where the recording mark should be formed in terms of a parallel direction to both sides of the optical information recording medium; a second beam collection section that makes, when collecting and emitting the second beam to the optical information recording medium, a second beam collection angle of an optical axis of the second beam emitted to the optical information recording medium relative to its outermost circumference smaller than a first beam collection angle of an optical axis of the first beam emitted to the optical information recording medium relative to its outline in order to make a diameter of the second beam around its focal point larger than a diameter of the first beam around its focal point; and

a second focal point shifting section that puts the focal point of the second beam at the target depth and moves the focal point of the second beam such that the second beam strikes the target track.

2. The optical information recording device according to claim 1, wherein
the second focal point shifting section emits the second beam to the target track by aligning the optical axis of the second beam with the optical axis of the first beam.

3. The optical information recording device according to claim 2, wherein
the second focal point shifting section aligns the optical axis of the second beam with the optical axis of the first beam so that the first beam stays inside the second beam.

4. The optical information recording device according to claim 1, 2 or 3, wherein
the first and second beam collection sections make the optical power and density of the focal point of the second beam at the same level as the optical power and density of the focal point of the first beam.

5. The optical information recording device according to one of the claims 1 to 4, further comprising:

an optical power adjustment section that adjusts, when the beam is divided into the first and second beams, the ratio of the first beam to the second beam to make the optical power and density of the second beam around the target position at the same level as the optical power and density of the first beam around the target position.

6. The optical information recording device according to one of the claims 1 to 5, wherein
the first beam collection section includes a first objective lens facing the optical information recording medium; and the second beam collection section includes a second objective lens facing the optical information recording medium, wherein

the numerical aperture of the first objective lens is set to be larger than the numerical aperture of the second objective lens so that the beam collection angle of the second beam becomes smaller than the beam collection angle of the first beam.

7. The optical information recording device according to one of the claims 1 to 6, wherein
the first beam collection section includes a first objective lens facing the optical information recording medium; and the second beam collection section includes a second objective lens facing the optical information recording medium, wherein

the diameter of the first beam entering the first objective lens is set to be different from the diameter of the second beam entering the second objective lens so that the beam collection angle of the second beam becomes smaller than the beam collection angle of the first beam.

8. The optical information recording device according to one of the claims 1 to 7, wherein
the first beam collection section includes a first objective lens facing the optical information recording medium; and the second beam collection section includes a second objective lens facing the optical information recording medium, wherein

the refractive index of the first objective lens is set to be different from the refractive index of the second objective lens so that the beam collection angle of the second beam becomes smaller than the beam collection angle of the first beam.

9. The optical information recording device according to one of the claims 1 to 8, wherein
the first beam collection section includes a first objective lens facing the optical information recording medium; and
the second beam collection section includes a second objective lens facing the optical information recording medium, wherein

the convergence state of the first beam entering the first objective lens is set to be different from the convergence state of the second beam entering the second objective lens so that the beam collection angle of the second beam becomes smaller than the beam collection angle of the first beam.

10. The optical information recording device according to one of the claims 1 to 9, wherein
the first beam collection section emits the first beam to the optical information recording medium on which the recording mark is recorded, the optical information recording device including

a readout section that reads out information from the optical information recording medium based on the reflection of the first beam from the optical information recording medium.

11. An optical pickup that divides a beam emitted from a beam source into a first beam and a second beam, emits the first beam to one side of an optical information recording medium and the second beam to the other side of the optical information recording medium, and forms a recording mark that is a hologram by putting together the first and second beams inside the optical information recording medium, the optical pickup comprising:

a first beam collection section that collects the first beam and emits the first beam to the optical information recording medium;
a first focal point shifting section that moves a focal point of the first beam so that the focal point of the first beam is positioned at a target depth and is aligned with a target track, the target depth representing a depth at which the recording mark should be formed in terms of the direction of depth along which it moves close to or away from the optical information recording medium and the target track representing a track where the recording mark should be formed in terms of a parallel direction to both sides of the optical information recording medium;
a second beam collection section that makes, when collecting and emitting the second beam to the optical information recording medium, a second beam collection angle of an optical axis of the second beam emitted to the optical information recording medium relative to its outermost circumference smaller than a first beam collection angle of an optical axis of the first beam emitted to the optical information recording medium relative to its outermost circumference in order to make a diameter of the second beam around its focal point larger than a diameter of the first beam around its focal point; and
a second focal point shifting section that puts the focal point of the second beam at the target depth and moves the focal point of the second beam such that the second beam strikes the target track.

12. An optical information recording method that divides a beam emitted from a beam source into a first beam and a second beam, emits the first beam to one side of an optical information recording medium and the second beam to the other side of the optical information recording medium, and forms a recording mark that is a hologram by putting together the first and second beams inside the optical information recording medium, the optical information recording method comprising:

moving, when collecting the first beam and emitting the first beam to the optical information recording medium, a focal point of the first beam so that the focal point of the first beam is positioned at a target depth and is aligned with a target track, the target depth representing a depth at which the recording mark should be formed in terms of the direction of depth along which it moves close to or away from the optical information recording medium and the target track representing a track where the recording mark should be formed in terms of a parallel direction to both sides of the optical information recording medium;
making, when collecting and emitting the second beam to the optical information recording medium, a second beam collection angle of an optical axis of the second beam emitted to the optical information recording medium relative to its outermost circumference smaller than a first beam collection angle of an optical axis of the first beam emitted to the optical information recording medium relative to its outermost circumference in order to make a diameter of the second beam around its focal point larger than a diameter of the first beam around its focal point; and
putting the focal point of the second beam at the target depth and moving the focal point of the second beam such that the second beam strikes the target track.

**13.** An optical information recording medium comprising

a recording layer on which a recording mark is recorded due to the change of refractive index around a high-power bright portion of a hologram that is formed where both first and second beam strike when the second beam whose wavelength is the same as the first beam is emitted, the diameter of the second beam around its focal point being larger than the diameter of the first beam around its focal point while the refractive index substantially does not change where only the second beam strikes.

**14.** The optical information recording medium according to claim 13, further comprising:

a reflection layer that substantially totally transmits the first and second beams therethrough while reflecting a third beam whose wavelength is different from the first and second beams, the third beam being used for driving a first objective lens to a target depth position and a target track position.

1

6 QUARTER WAVE LENGTH PLATE
5 POLARIZING BEAM SPLITTER
3 ACOUSTIC OPTICAL MODULATOR

7A MIRROR

7B OBJECTIVE LENS

~2 LASER

8 OPTICAL DISC

4 COLLIMATOR LENS

~10 COLLECTION LENS

~11 PINHOLE

COLLECTION LENS 9A

SHUTTER 9B

COLLECTION LENS 9C

12 PHOTODETECTOR

REFLECTION MIRROR 9D

9 REFLECTION DEVICE

FIG. 1 (RELATED ART)

RMr

RM

RMh

## FIG. 2A (RELATED ART)

8

RM

p2

p1

p3

## FIG. 2B (RELATED ART)

FIG. 3 (RELATED ART)

100H HOLE SECTION

~100 OPTICAL DISC

FIG. 4A

100 OPTICAL DISC

102 BASE PLATE

101 RECORDING LAYER

103 BASE PLATE

104 REFLECTION AND TRANSMISSION FILM

100H

d(d1, d2)

Lb1, Lb3

Lr1, Lr2

Lb2

FIG. 4B

Fb1, Fb2

Fr

Lx

OL1 OBJECTIVE LENS

OL2 OBJECTIVE LENS

100A GUIDING SURFACE

100B RECORDING BEAM EXPOSURE SURFACE

t2   t1   t3

27

20

26 OPTICAL PICKUP

100 OPTICAL DISC

25 SLED MOTOR

25A, 25B

24
SPINDLE
MOTOR

DRIVE CONTROL
SECTION

SIGNAL PROCESSING
SECTION ～23

22

CONTROL
SECTION ～21

FIG. 5

100 OPTICAL DISC　(INNERMOST)

(CIRCUMFERENCE)

26 OPTICAL PICKUP

25B

25A

FIG. 6

FIG. 7

EP 2 012 312 A1

**26** OPTICAL PICKUP

**100** OPTICAL DISC

**100A** GUIDING SURFACE

**100B** RECORDING BEAM EXPOSURE SURFACE

**30** GUIDING SURFACE POSITION CONTROL OPTICAL SYSTEM

31  32 33 34 34S 35  36  37 37S 38A  79A  78A
38  79  78
Lr1  62  77
43 42 41  61  76
40  61A  76A
Lr2  60  59  75  74

65 64 63  58
58S  55C
55A 55 55D 71 72 72S  73
51 52 53  54  55B 55S
56  80
57  81
82

**50** GUIDING SURFACE INFORMATION OPTICAL SYSTEM

**70** RECORDING BEAM EXPOSURE SURFACE OPTICAL SYSTEM

FIG. 8

30

FIG. 9

FIG. 12

FIG. 10

**26 OPTICAL PICKUP**

**100 OPTICAL DISC**

**30 GUIDING SURFACE POSITION CONTROL OPTICAL SYSTEM**

100A GUIDING SURFACE

100B RECORDING BEAM EXPOSURE SURFACE

**50 GUIDING SURFACE INFORMATION OPTICAL SYSTEM**

**70 RECORDING BEAM EXPOSURE SURFACE OPTICAL SYSTEM**

FIG. 11

33

FIG. 13A

FIG. 13B

FIG. 14

FIG. 15

Af1, Af2 {    Fb1, Fb2

Lb1, Lb2

FIG. 16

| | Europäisches Patentamt European Patent Office Office européen des brevets | **EUROPEAN SEARCH REPORT** | Application Number EP 08 15 8368 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/015376 A1 (LIU TSUEN-HSI [US] ET AL LIU TSUEN-HSI [US] ET AL) 7 February 2002 (2002-02-07) * paragraphs [0215] - [0219]; figures 8A-C * | 1-12 | INV. G11B7/0065 G11B7/085 |
| A | SUN C-C ET AL: "Diffraction selectivity of holograms with random phase encoding" OPTICS COMMUNICATIONS, NORTH-HOLLAND PUBLISHING CO. AMSTERDAM, NL, vol. 175, no. 1-3, 1 February 2000 (2000-02-01), pages 67-74, XP004189564 ISSN: 0030-4018 * the whole document * | 1-12 | |
| X | HIDEYOSHI HORIMAI ET AL: "Collinear holography" APPLIED OPTICS, OSA, OPTICAL SOCIETY OF AMERICA, WASHINGTON, DC, vol. 44, no. 13, 1 May 2005 (2005-05-01), pages 2575-2579, XP007901854 ISSN: 0003-6935 * figure 3 * | 13,14 | |
| A | * the whole document * | 1-12 | TECHNICAL FIELDS SEARCHED (IPC) G11B |

The present search report has been drawn up for all claims

| Place of search | Date of completion of the search | Examiner |
|---|---|---|
| The Hague | 17 October 2008 | Zimmer, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 8368

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2008

| Patent document cited in search report | Publication date | Patent family member(s) | Publication date |
|---|---|---|---|
| US 2002015376 A1 | 07-02-2002 | NONE | |

EPO FORM P0459

For more details about this annex : see Official Journal of the European Patent Office, No. 12/82

**EP 2 012 312 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007170977 A

**Non-patent literature cited in the description**

- **Y. KASAMI ; Y. KURODA ; K. SEO ; O. KAWAKUBO ; S. TAKAGAWA ; M. ONO ; M. YAMADA.** *Jpn. J. Appl. Phys.,* 2000, vol. 39, 756
- **I. ICHIMURA et al.** *Technical Digest of ISOM '04,* 11 October 2005, 52
- **R. R. MCLEOD et al.** Micropholographicmultilayer optical disc data storage. *Appl. Opt.,* 2005, vol. 44, 3197